(19)

Europäisches Patentamt

European Patent Office

Office européen des brevets

(11) **EP 1 755 105 A2**

(12) **EUROPEAN PATENT APPLICATION**

(43) Date of publication:
**21.02.2007 Bulletin 2007/08**

(51) Int Cl.:
***G09G 3/36*** *(2006.01)*

(21) Application number: **06125738.2**

(22) Date of filing: **23.03.1999**

(84) Designated Contracting States:
**DE GB NL**

(30) Priority: **25.03.1998 JP 7681398**
**27.08.1998 JP 24139298**

(62) Document number(s) of the earlier application(s) in accordance with Art. 76 EPC:
**99909300.8 / 1 069 457**

(71) Applicant: **SONY CORPORATION**
**Tokyo (JP)**

(72) Inventors:
  • **Ino, Masumitsu**
    **Sony Corporation**
    **Tokyo 141-0001 (JP)**
  • **Tsubota, Hiroyoshi**
    **Sony Corporation**
    **Tokyo 141-0001 (JP)**
  • **Ichikawa, Hiroaki**
    **Sony Corporation**
    **Tokyo 141-0001 (JP)**
  • **Teraguchi, Shinichi**
    **Sony Corporation**
    **Tokyo 141-0001 (JP)**
  • **Oka, Taketo**
    **Sony Corporation**
    **Tokyo 141-0001 (JP)**
  • **Akutagawa, Toru**
    **Sony Corporation**
    **Tokyo 141-0001 (JP)**
  • **Maekawa, Toshikazu**
    **Sony Corporation**
    **Tokyo 141-0001 (JP)**
  • **Nakajima, Yoshiharu**
    **Sony Corporation**
    **Tokyo 141-0001 (JP)**
  • **Goto, Naoshi**
    **Sony Corporation**
    **Tokyo 141-0001 (JP)**

(74) Representative: **Thévenet, Jean-Bruno et al**
**Cabinet Beau de Loménie**
**158, rue de l'Université**
**75340 Paris Cédex 07 (FR)**

Remarks:
This application was filed on 08 - 12 - 2006 as a divisional application to the application mentioned under INID code 62.

(54) **Driving circuit for colour liquid crystal display**

(57)   A liquid crystal display comprises a liquid crystal display panel (10) having a plurality of pixels two-dimensionally arranged at intersecting points of gate lines as many as a plurality of rows and signal lines as many as a plurality of columns which are wired in a matrix shape; and a plurality of driver ICs (14-1,...,14-6) for applying a signal potential to each pixel of the liquid crystal display panel (10) through the signal lines of a plurality of columns. The number of output pins of each of the driver ICs is set to a measure of the total number of signal lines of the columns, thereby preventing that a fraction occurs in the signal lines.

Fig. 7

EP 1 755 105 A2

**Description**

Technical Field

The invention relates to a liquid crystal display (LCD) and, more particularly, to a matrix type liquid crystal display in which a driver circuit to apply a signal potential to each pixel is provided as an external circuit of a liquid crystal display panel.

Background Art

Among liquid crystal displays which are used in personal computers, word processors, and the like, a matrix type is a main stream. The matrix type liquid crystal display is excellent in terms of a response speed and an image quality and is a display apparatus suitable for realization of a recent color display. In such a kind of display apparatus, a non-linear element such as transistor, diode, or the like is used in each pixel of a liquid crystal display panel. Specifically speaking, it has a structure such that a thin film transistor (TFT) is formed on a glass substrate.

Particularly, a large liquid crystal display has a construction in which a driver IC to apply a predetermined voltage to each pixel is provided in the outside of a liquid crystal display panel. Ordinarily, there is a one-to-one correspondence relation between an output of the external driver IC and a signal line of the liquid crystal display panel. That is, an output voltage from each output terminal of the driver IC is inputted as it is to the corresponding signal line.

Therefore, for example, in a liquid crystal display of an XGA (extended graphics array) display system having 1024 (that is, total 3072 = 1024 x 3) signal lines every color of R (red), G (green), and B (blue), if it is intended to connect an existing general driver IC having, for example, 120 output pins (output terminals) to each signal line, total 26 driver ICs are necessary.

However, as mentioned above, if the general driver IC is used for the signal lines in which the total number of output pins is determined by the display system is used, a situation such that a remainder occurs in the number of pins of the driver IC occurs. For example, in the case where 26 general driver ICs each having 120 output pins are used for 3072 signal lines, only 48 (= 120 x 26 - 3072) output pins of the driver IC which is finally arranged remain.

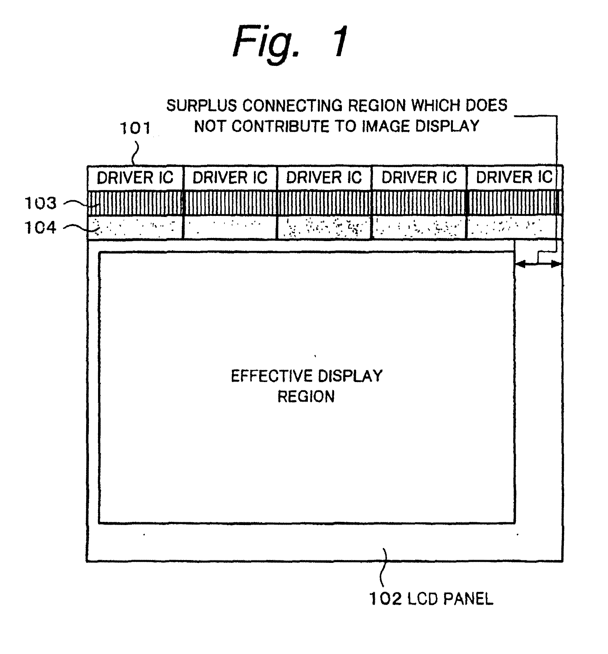

When considering from a viewpoint of the size of liquid crystal display panel, as shown in Fig. 1, a surplus pin portion among the output pins of a driver IC 101 becomes a surplus connecting region which does not contribute to the image display and occupies right and left frame portions of a liquid crystal display panel 102, so that a size in the horizontal direction of the liquid crystal display panel 102 increases. Thus, it becomes an obstacle for realization of a compact size of the whole liquid crystal display. In Fig. 1, the driver IC 101 is connected to each signal line in connecting portions 104 on the liquid crystal display panel 102 through flexible cables 103.

In case of performing a color display accompanied with gradation, a construction of an output buffer circuit and a gradation control circuit for outputting a voltage to be applied to a thin film transistor of each pixel becomes complicated and the driver IC itself is also expensive. It is vain to use such an expensive driver IC in a state where a circuit portion corresponding to the remaining output pins never contributes to the display. This also results in an increase in costs of the liquid crystal display.

Disclosure of Invention

The invention is made in consideration of the above problems and it is an object of the invention to provide a liquid crystal display which can realize a narrow width in the horizontal direction of a liquid crystal display panel in case of using an external driver IC.

According to the invention, there is provided a liquid crystal display comprising: a display portion in which a plurality of pixels are two-dimensionally arranged at intersecting points of gate lines as many as a plurality of rows and signal lines as many as a plurality of columns which are wired in a matrix shape; and a plurality of driver circuits for applying a signal potential to each pixel of the display portion through the signal lines of a plurality of columns, wherein the number of output terminals of each of the plurality of driver circuits is set to a measure of the total number of signal lines of a plurality of columns.

In a liquid crystal display with the above construction, when the number of output terminals of the driver circuit is set, the number of respective output terminals is set to the measure of the total number of signal lines and the driver circuits of the number that is determined by the number of output terminals are arranged. Thus, no fraction occurs in the signal lines for a plurality of driver circuits. Therefore, since the output terminals of the driver circuits can be connected to the respective signal lines without causing a remainder, a surplus connecting region which does not contribute to the image display does not occur in the display portion.

Brief Description of Drawings

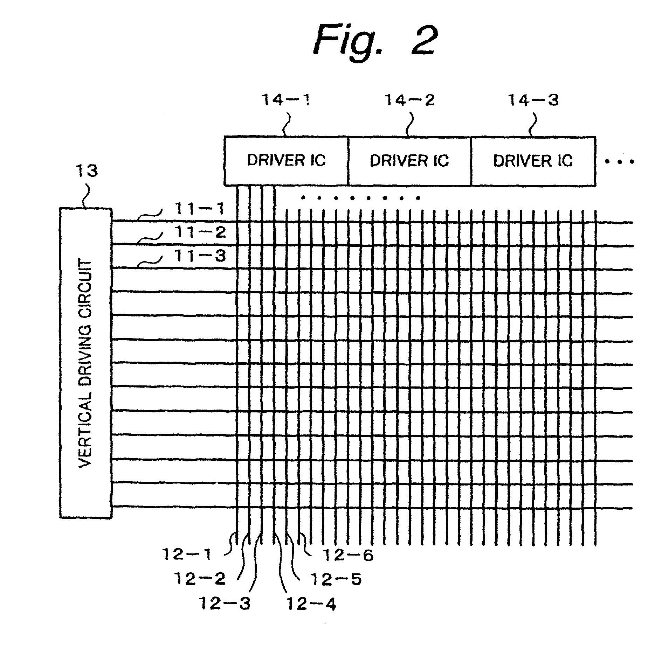

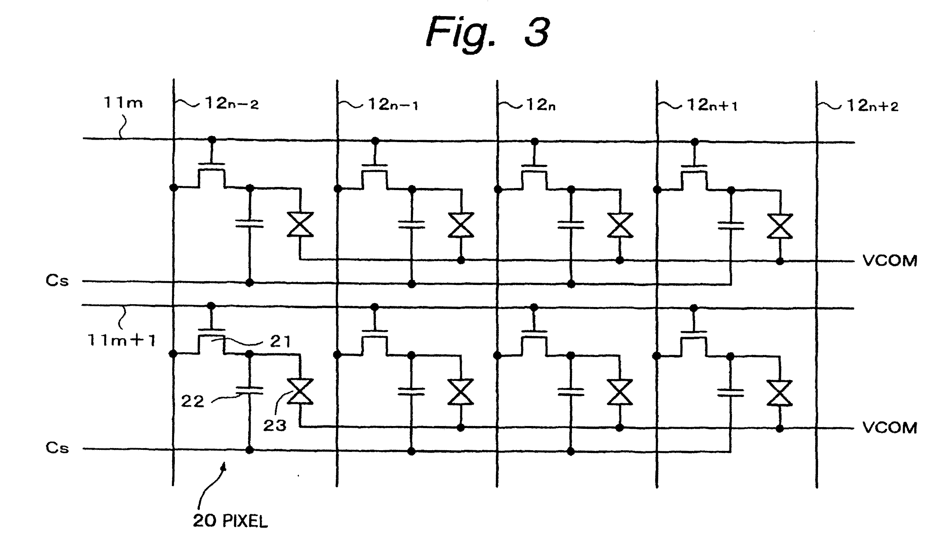

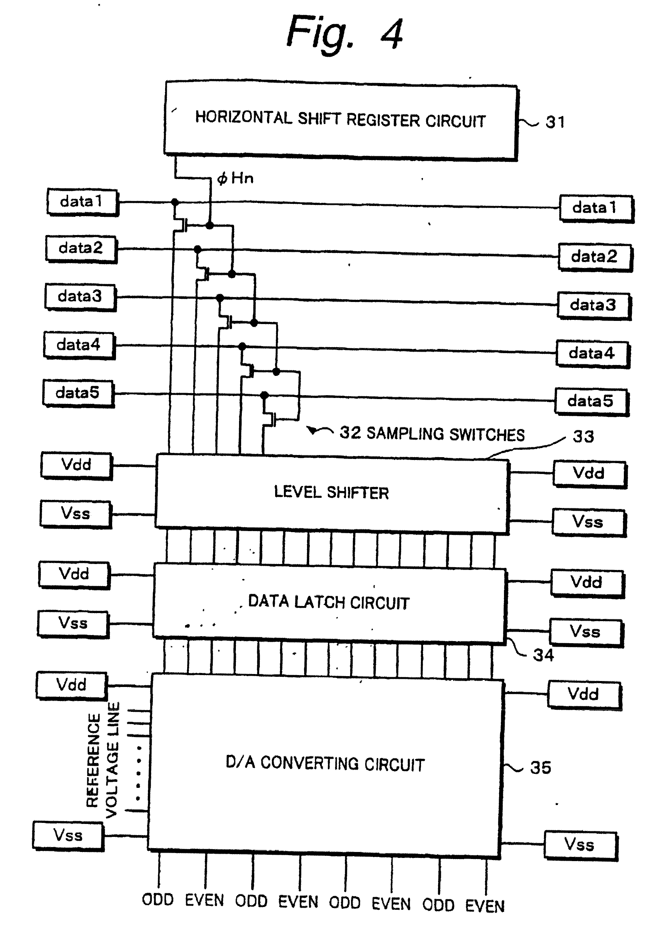

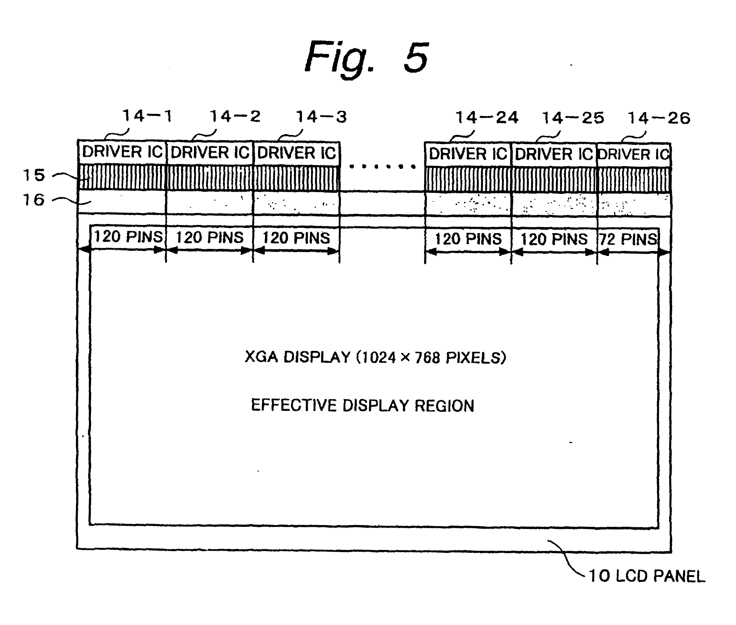

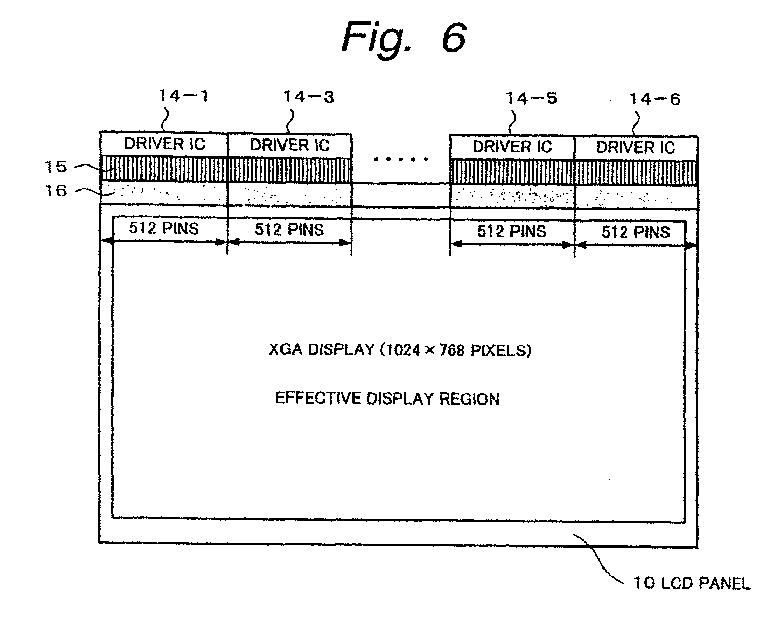

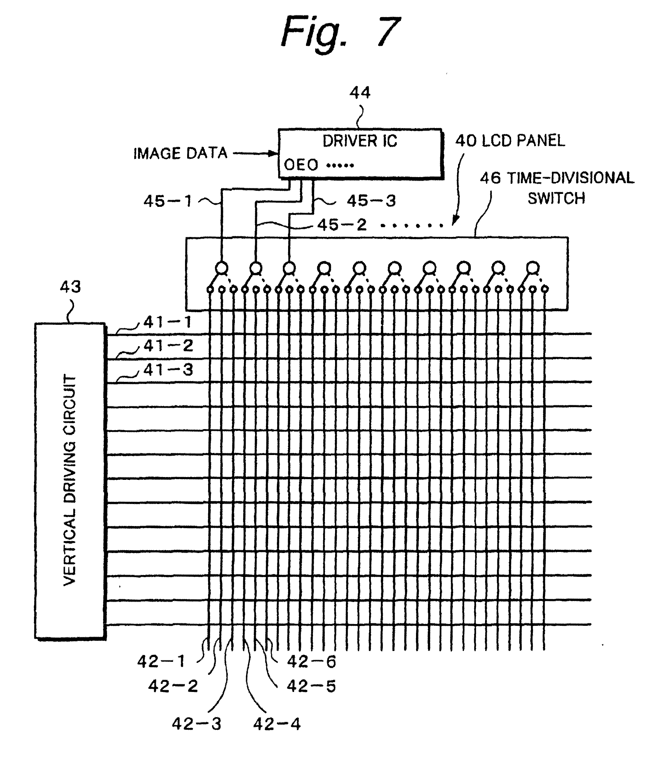

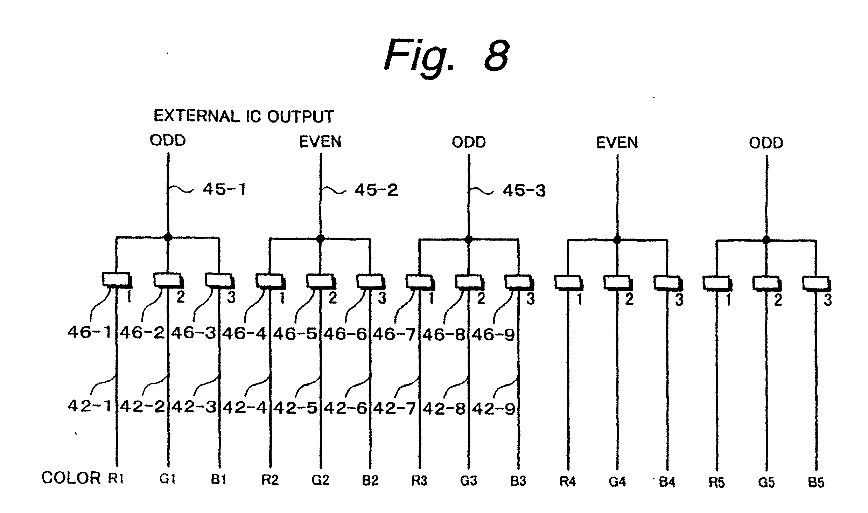

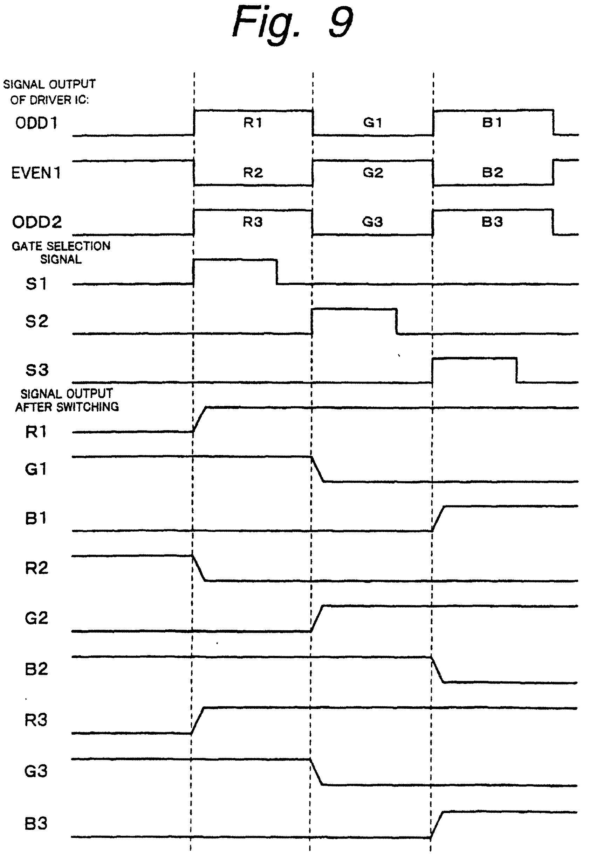

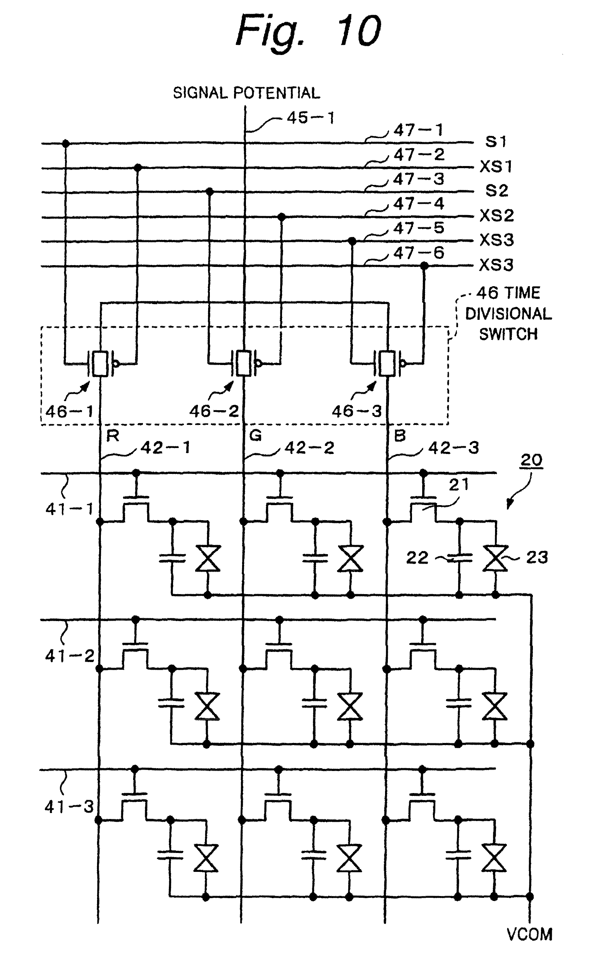

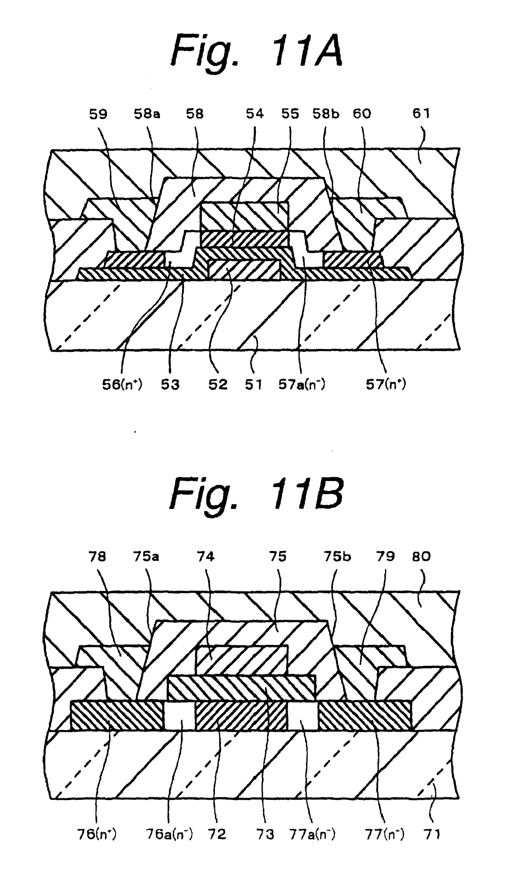

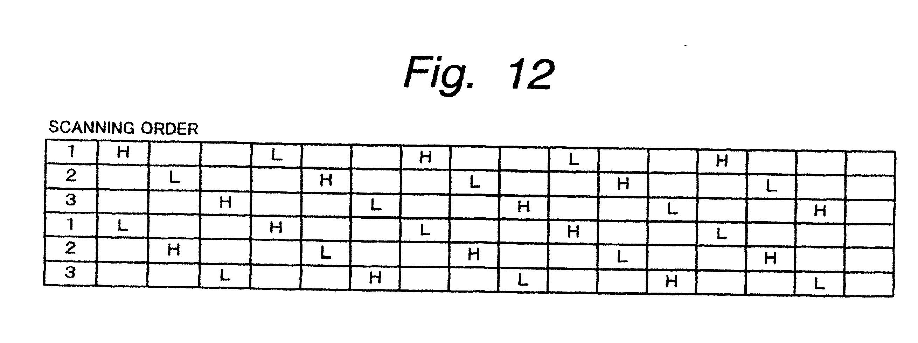

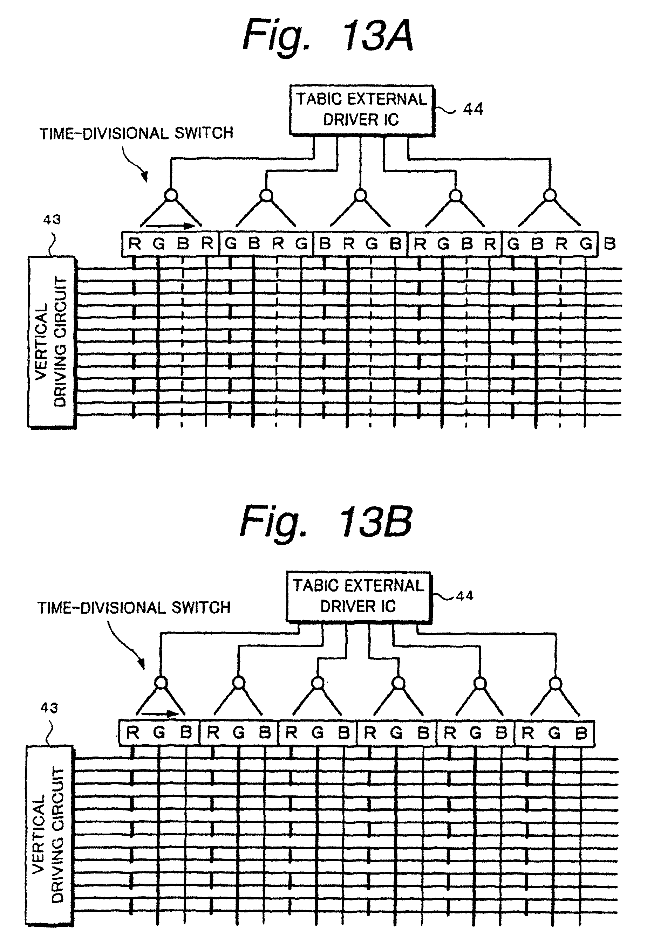

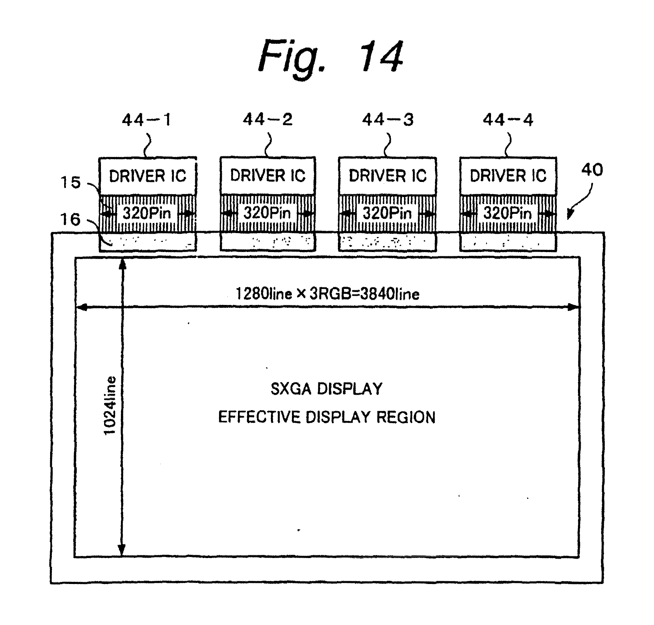

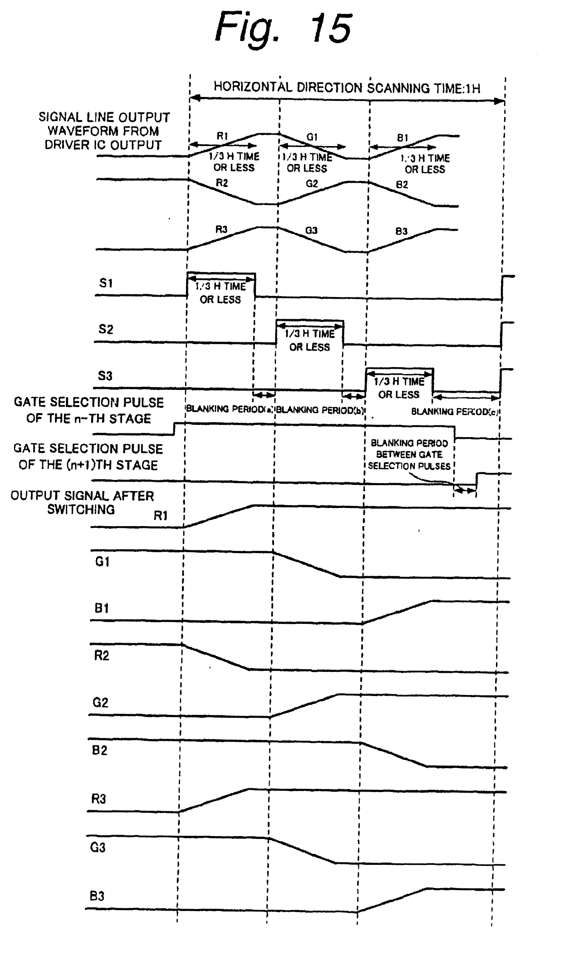

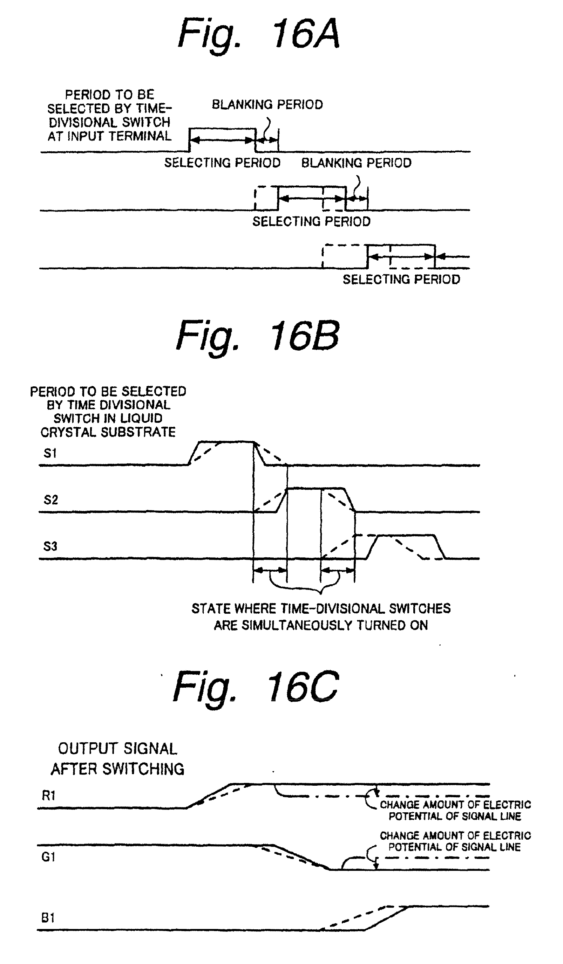

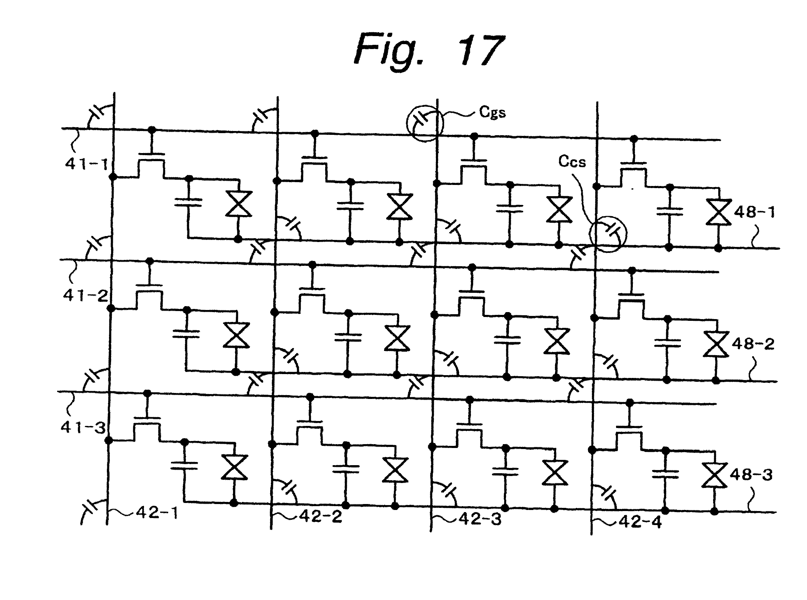

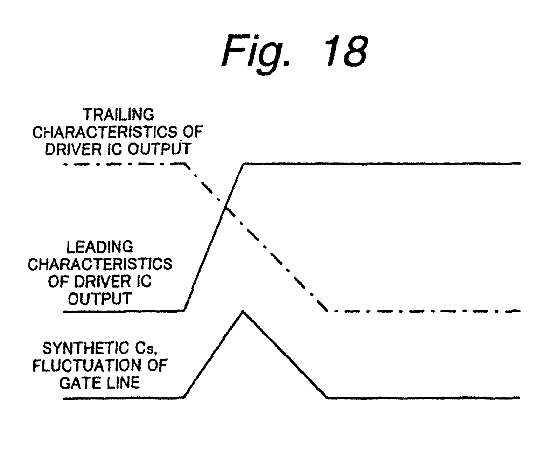

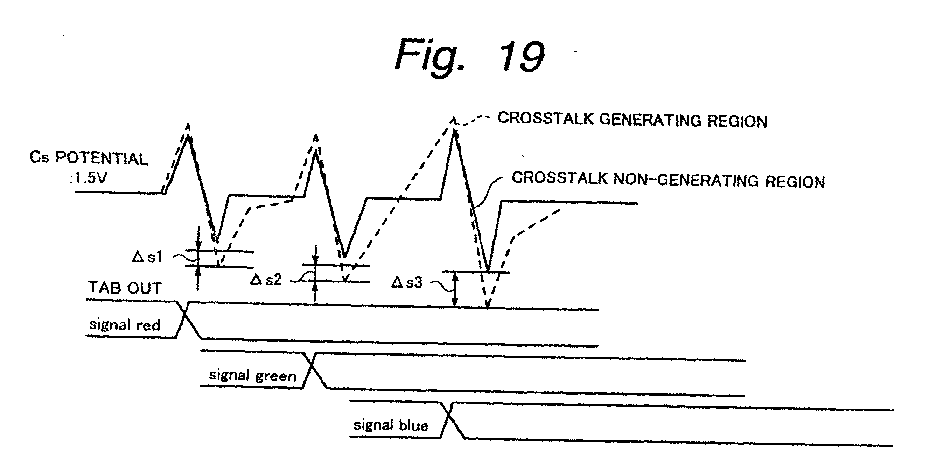

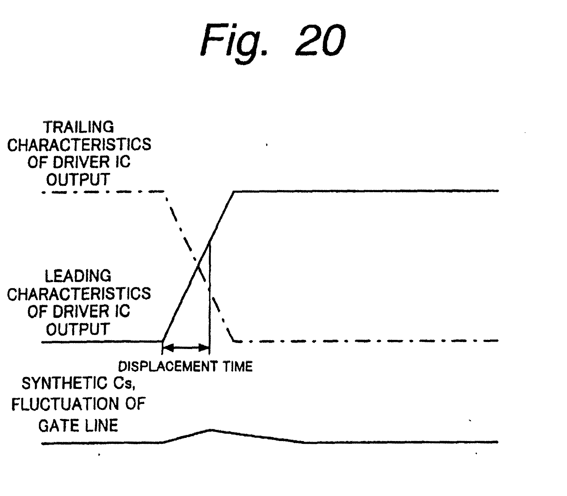

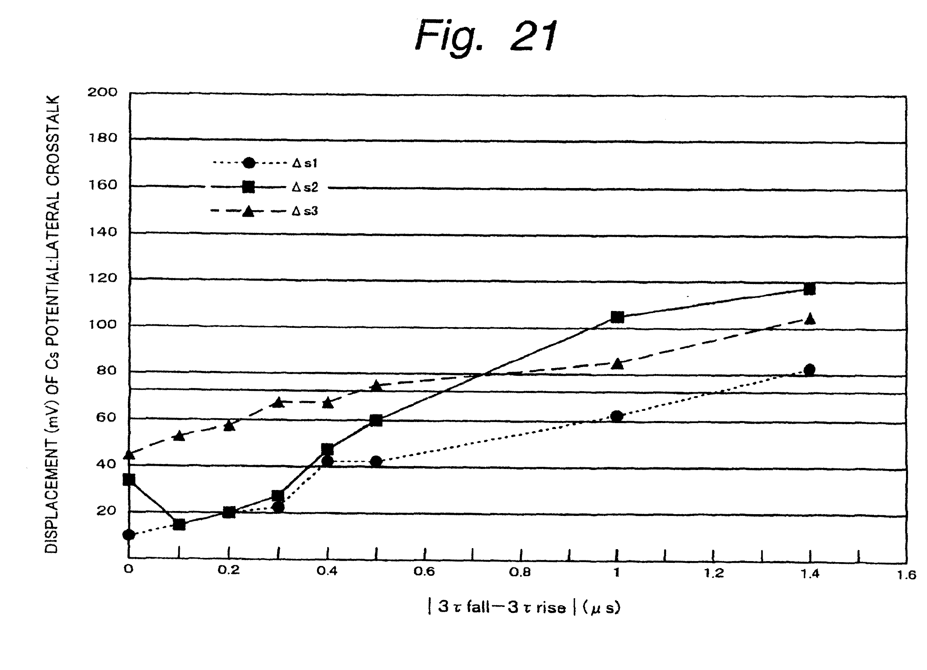

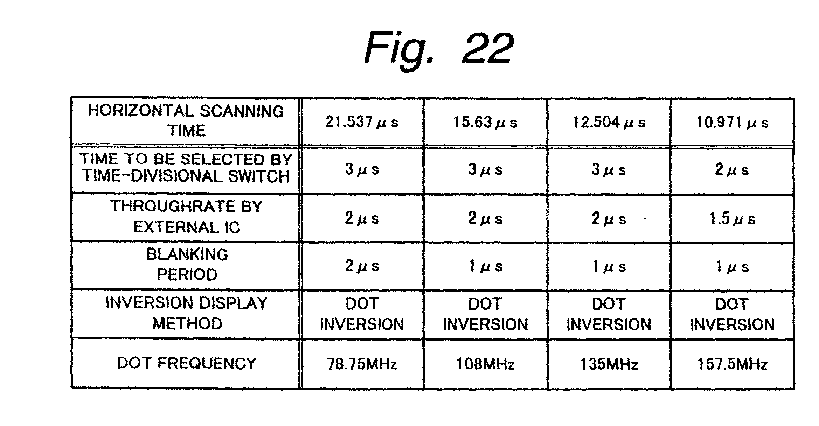

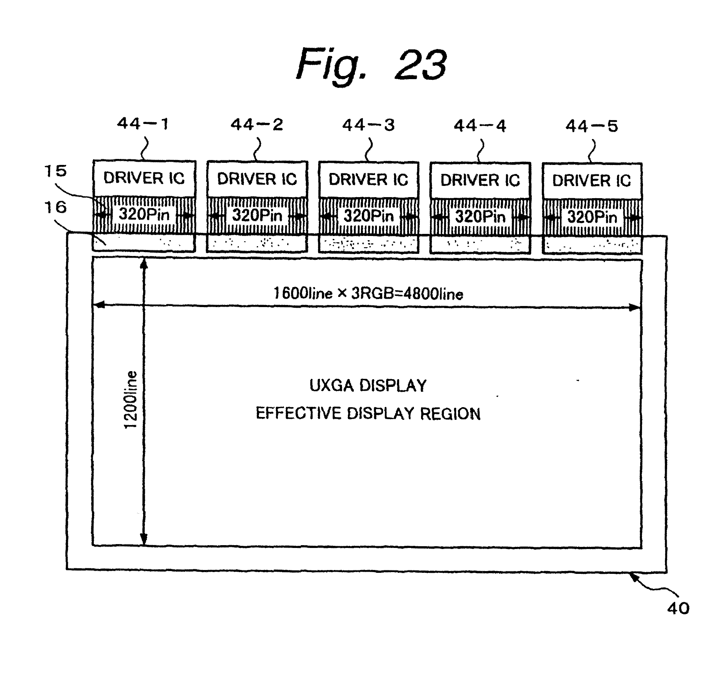

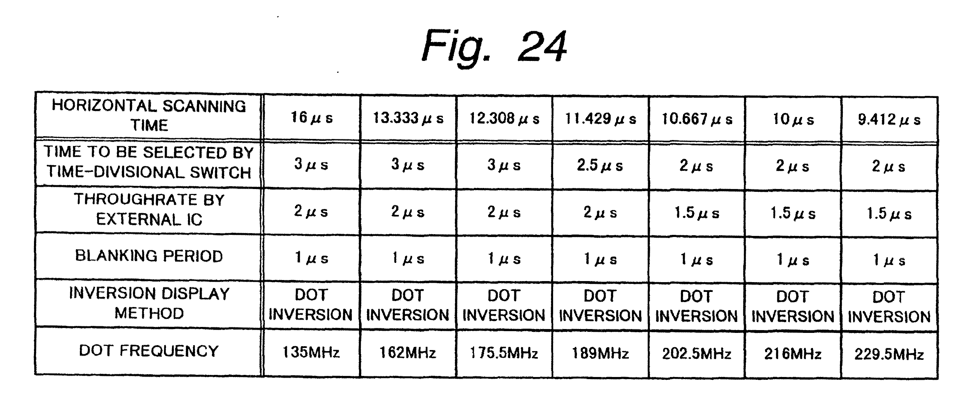

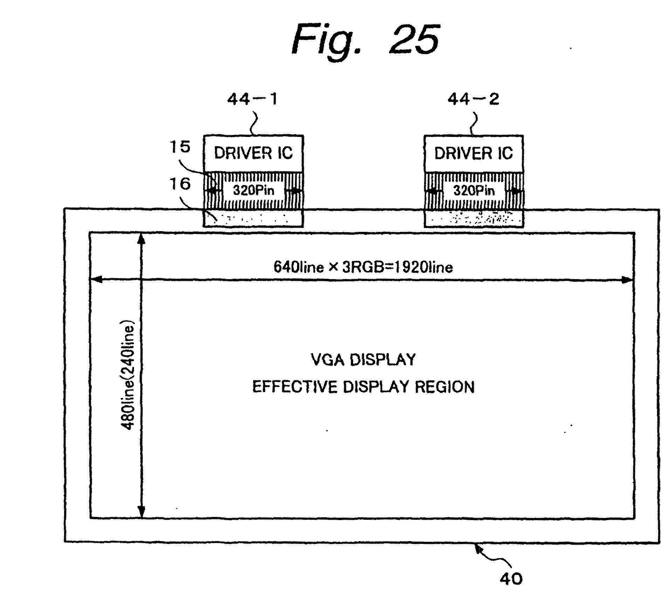

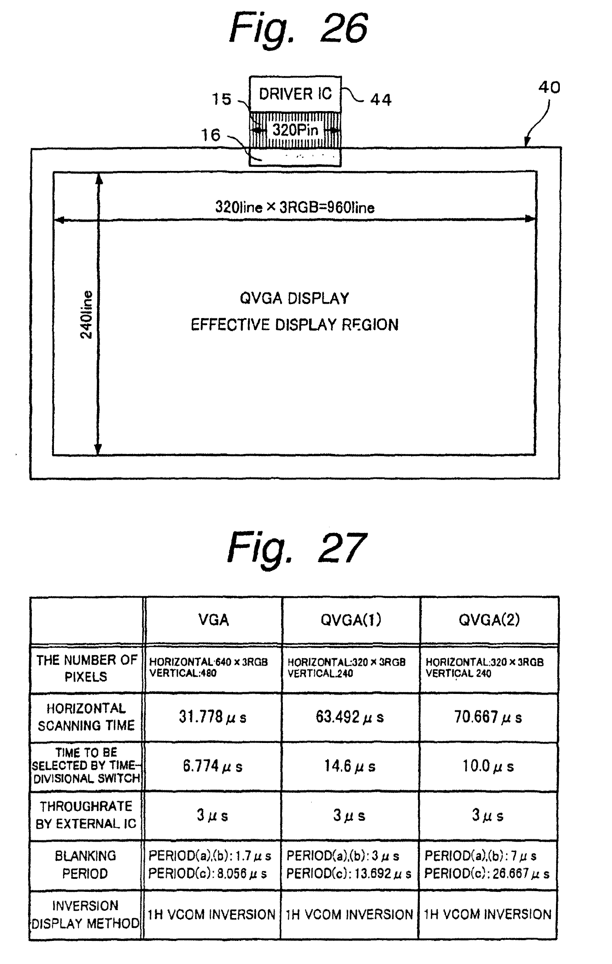

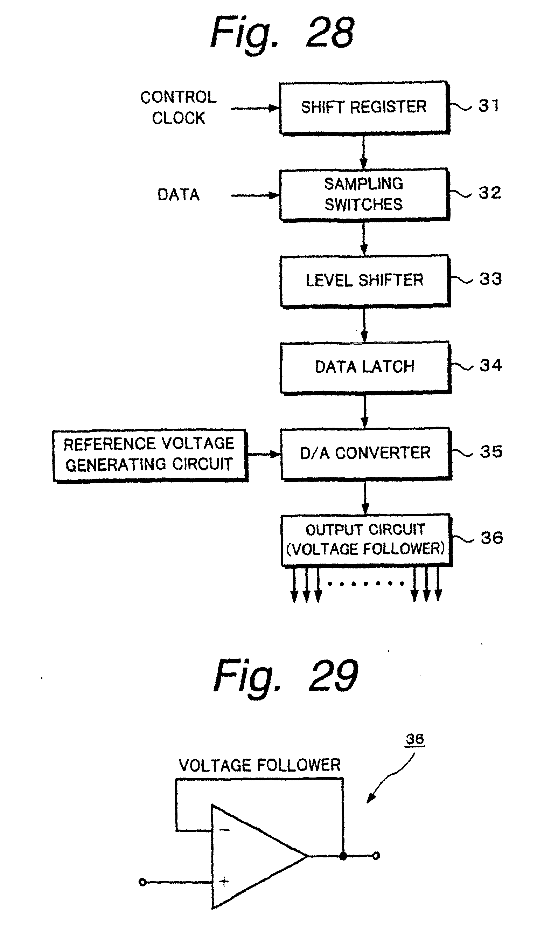

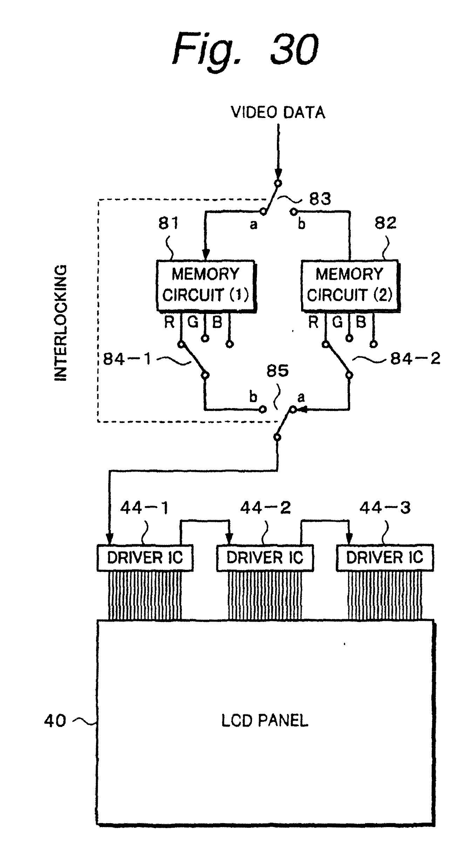

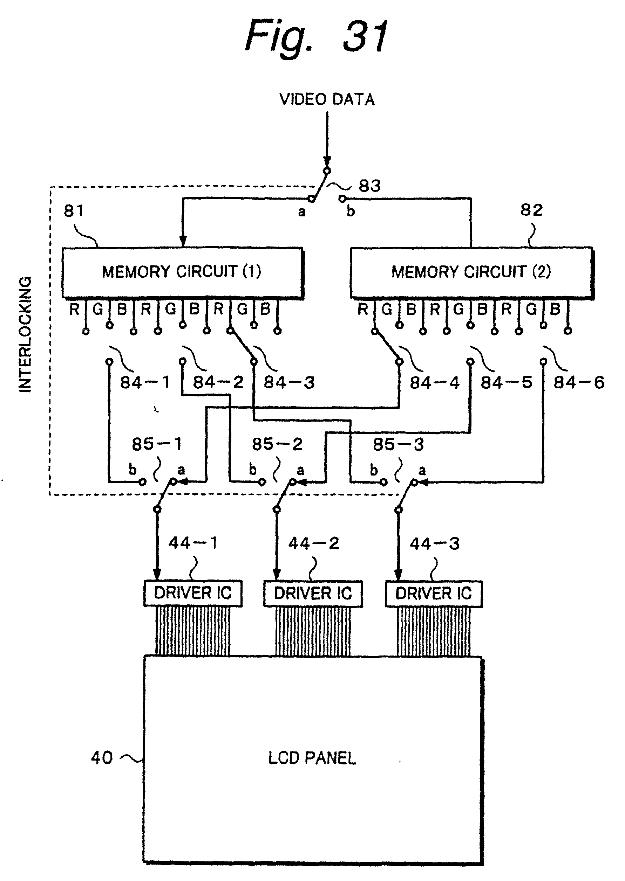

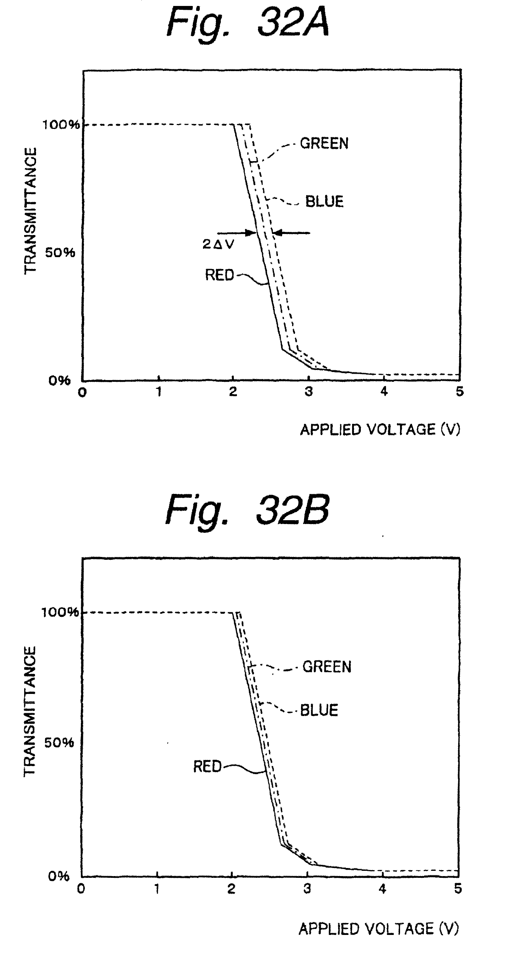

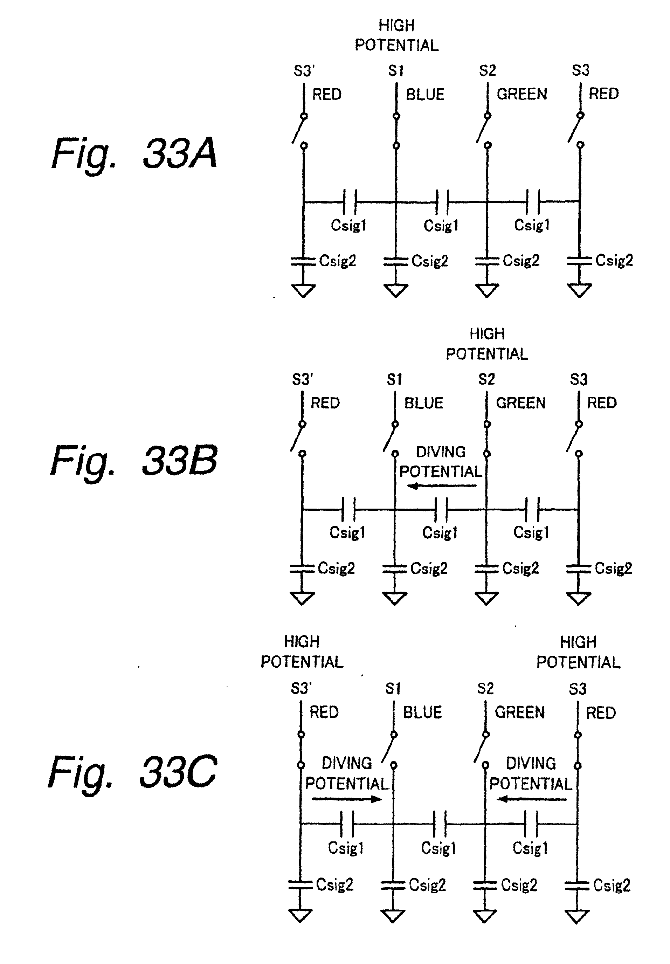

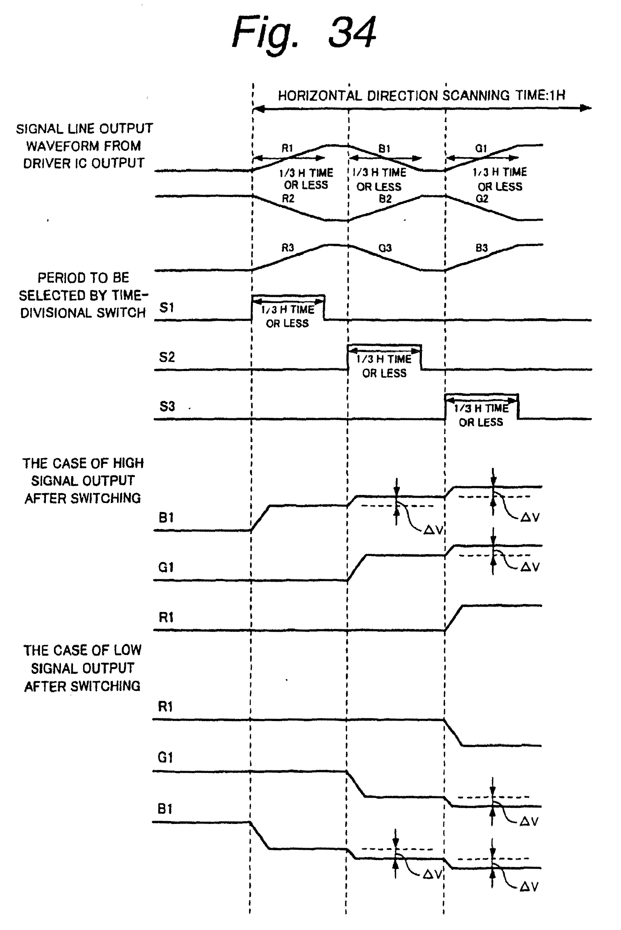

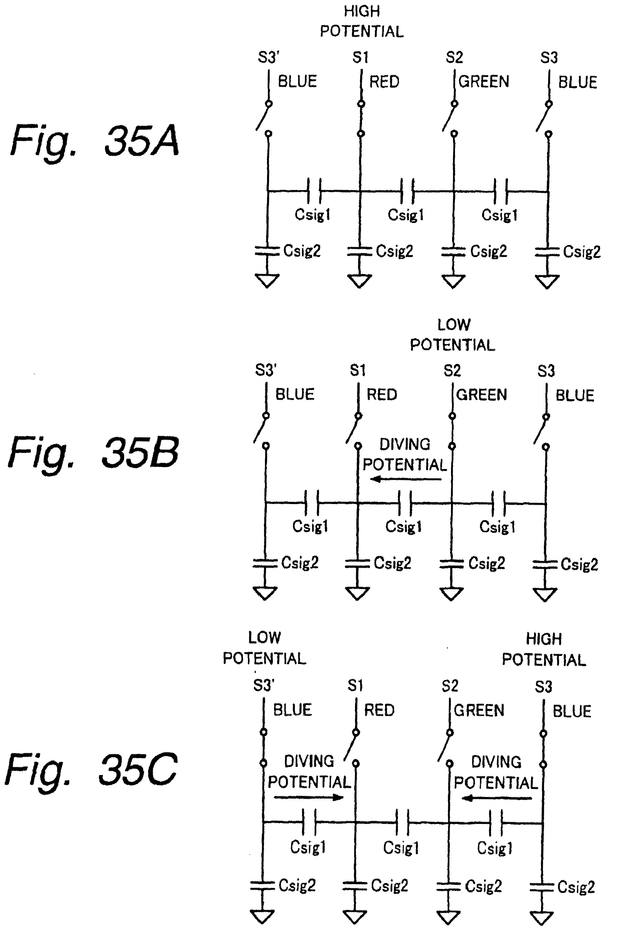

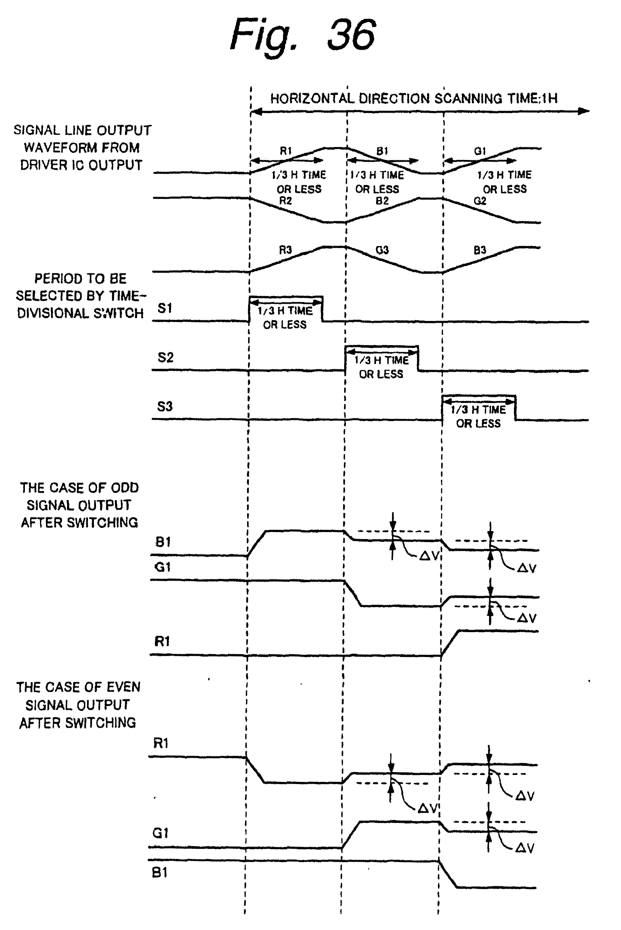

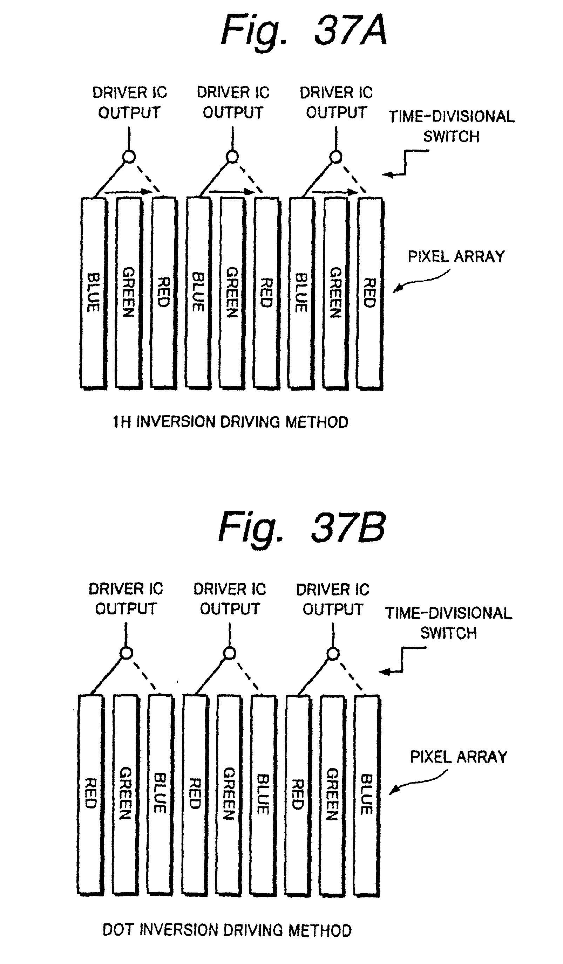

Fig. 1 is a schematic constructional diagram showing an example of a conventional matrix type liquid crystal display; Fig. 2 is a wiring diagram of a liquid crystal display portion in a matrix type liquid crystal display according to the invention; Fig. 3 is a circuit constructional diagram of pixels; Fig. 4 is a block diagram showing an example of an internal construction of a driver IC; Fig. 5 is a schematic constructional diagram showing one liquid crystal display device; Fig. 6 is a schematic constructional diagram showing the first embodiment of the invention; Fig. 7 is a wiring diagram of a liquid crystal display portion in a matrix type liquid crystal display using a time-divisional driving; Fig. 8 is a connection constructional diagram of time-divisional switches in case of the 3-time-divisional driving; Fig. 9 is a timing chart of each signal in case of the 3-time-divisional driving; Fig. 10 is a circuit diagram showing a specific construction of a certain set of time-divisional switches; Fig. 11A is a cross sectional structure diagram showing an example of a thin film transistor of a bottom gate structure; Fig. 11B is a cross sectional structure diagram showing an example of a thin film transistor of a top gate structure; Fig. 12 is a diagram showing a writing state of a signal voltage to each pixel in case of the 3-time-divisional driving; Figs. 13A and 13B are diagrams for comparing the case of 4-time-division with the case of 3-time-division; Fig. 14 is a constructional diagram of an example of a liquid crystal display of the SXGA display system; Fig. 15 is a timing chart for explaining the operation of the SXGA display system; Figs. 16A, 16B, and 16C are waveform diagrams for explaining a difference between the case (solid line) where a blanking period is provided and the case (broken line) where it is not provided; Fig. 17 is a circuit diagram showing a circuit construction of liquid crystal pixels; Fig. 18 is a waveform diagram in the case where a leading waveform and a trailing waveform of a driver IC are asymmetrical for a time base; Fig. 19 is a diagram for explaining a fluctuation of an electric potential of a Cs line; Fig. 20 is a waveform diagram in the case where the leading waveform and the trailing waveform of the driver IC are symmetrical for the time base; Fig. 21 is a diagram showing a time difference of $\tau$rise and $\tau$fall in case of the SXGA display system of 17 inches and a simulation result of a fluctuation of the Cs line; Fig. 22 is a diagram showing an example of numerical values of periods in case of the SXGA display system; Fig. 23 is a constructional diagram of an example of a liquid crystal display of the UXGA display system; Fig. 24 is a diagram showing an example of numerical values of periods in case of the UXGA display system; Fig. 25 is a constructional diagram of an example of a liquid crystal display of the VGA display system; Fig. 26 is a constructional diagram of an example of a liquid crystal display of the QVGA display system; Fig. 27 is a constructional diagram showing an example of numerical values of a period in case of each of the VGA and QVGA display systems; Fig. 28 is a block diagram showing another example of an internal construction of a driver IC; Fig. 29 is a block diagram showing an example of a construction of an output circuit in the driver IC; Fig. 30 is a block diagram showing a conventional example of a construction around a memory circuit; Fig. 31 is a block diagram showing an example of improvement of the construction around the memory circuit; Figs. 32A and 32B are characteristics diagrams of V-T curves of a liquid crystal in case of using a TN liquid crystal; Figs. 33A, 33B, and 33C are equivalent circuit diagrams each showing an example of a construction around time-divisional switches; Fig. 34 is a timing chart for explaining the operations of equivalent circuits of Figs. 33A, 33B, and 33C; Figs. 35A, 35B, and 35C are equivalent circuit diagrams showing other examples of the constructions around the time-divisional switches; Fig. 36 is a timing chart for explaining the operations of the equivalent circuits of Figs. 35A, 35B, and 35C; Fig. 37A is a diagram showing a relation between a pixel array in case of a 1H inversion driving method and a scanning direction of the time-divisional switches; and Fig. 37B is a diagram showing a relation between a pixel array in case of a dot inversion driving method and the scanning direction of the time-divisional switches.

Best Mode for Carrying Out the Invention

The best mode for carrying out the invention will now be described hereinbelow with reference to the drawings.
Fig. 2 is a wiring diagram of a liquid crystal display portion in a matrix type liquid crystal display according to the invention. The matrix type liquid crystal display has a structure such that gate lines 11-1, 11-2, 11-3, ... as many as a plurality of rows and signal lines 12-1, 12-2, 12-3, ... as many as a plurality of columns are wired in a matrix form onto the surface of liquid crystal and a back light is arranged on the back side of the liquid crystal. Intersecting points of the gate lines 11-1, 11-2, 11-3, ... and signal lines 12-1, 12-2, 12-3, ... become pixels and form a liquid crystal display panel (display portion) 10. A construction of the pixels will be described hereinlater.
One end of each of the gate lines 11-1, 11-2, 11-3, ... as many as a plurality of rows is connected to each output terminal of the corresponding row of a vertical driving circuit 13. The vertical driving circuit 13 is formed by a thin film transistor onto the same substrate as that of the liquid crystal display panel and performs a vertical scan by supplying scanning pulses in order to the gate lines 11-1, 11-2, 11-3, ... and selecting each pixel on a row unit basis. In the embodiment, although the vertical driving circuit 13 is arranged on only one side of the liquid crystal display panel 10, obviously, it can be arranged on both sides of the liquid crystal display panel 10.

A plurality of driver ICs 14-1, 14-2, 14-3, ... for applying a predetermined voltage according to image data to the signal lines 12-1, 12-2, 12-3, ... are provided as external circuits of the liquid crystal display panel 10. Digital image data which enables a display of, for example, 8 or more gradations and 512 or more colors is inputted to the plurality of driver ICs 14-1, 14-2, 14-3, ....

Fig. 3 is a circuit constructional diagram of the pixels. As will be obviously understood from Fig. 3, each pixel 20 is constructed by a thin film transistor 21, an additional capacitor 22, and a liquid crystal capacitor 23. A gate electrode of the thin film transistor 21 is connected to the gate lines 11-1, 11-2, 11-3, ... and a source electrode is connected to the signal lines 12-1, 12-2, 12-3, ..., respectively.

In the pixel structure, the liquid crystal capacitor 23 denotes a capacitance which occurs between a pixel electrode that is formed by the thin film transistor 21 and a counter electrode which is formed in correspondence to it. An electric potential which is held in the pixel electrode is written by an electric potential of "H" or "L". "H" indicates a high voltage writing state and "L" shows a low voltage writing state.

When the liquid crystal is driven, an electric potential (common potential VCOM) of the counter electrode is set to, for example, a DC potential of 6V. In response to it, by periodically fluctuating a signal voltage by the high voltage H and low voltage L at a 1-field period, AC driving can be realized. The AC driving can reduce a polarizing function of a liquid crystal molecule and charging of the liquid crystal molecule or charging of an insulating film existing on the electrode surface can be prevented.

In the pixel 20, when the thin film transistor 21 is turned on, a transmittance of light in the liquid crystal changes and the additional capacitor 22 is charged. By this charging, even if the thin film transistor 21 is turned off, a light transmittance state in the liquid crystal by the charging voltage of the additional capacitor 22 is held until the thin film transistor 21 is subsequently turned on. By such a system, a picture quality in the image on the liquid crystal display panel 10 is improved.

Fig. 4 is a block diagram showing an example of an internal construction of the driver ICs 14-1, 14-2, 14-3, .... As will be obviously understood from Fig. 4, the driver ICs have a horizontal shift register circuit 31, sampling switches 32, a level shifter 33, a data latch circuit 34, and a digital/analog converting circuit 35. In the embodiment, for example, digital image data data1 to data5 of five bits and power source voltages Vdd and Vss are fetched from both sides in the shift direction of the horizontal shift register circuit 31.

In the driver ICs 14-1, 14-2, 14-3, ... of the above construction, the horizontal shift register circuit 31 performs a horizontal scan (column scan) by sequentially generating horizontal scanning pulses. The sampling switches in the sampling switches 32 sequentially sample the input digital image data data1 to data5 in response to the horizontal scanning pulses from the horizontal shift register circuit 31.

The level shifter 33 boosts the digital data of, for example, 5V sampled by the sampling switches 32 to digital data of a liquid crystal driving voltage. The data latch circuit 34 is a memory to accumulate the digital data boosted by the level shifter 33 by an amount of one horizontal period. The digital/analog converting circuit 35 converts the digital data of one horizontal period which is outputted from the data latch circuit 34 into an analog signal and outputs it.

In the liquid crystal display with the foregoing construction, the invention is characterized by a construction of a connecting portion between each of the signal lines 12-1, 12-2, 12-3, ... of the liquid crystal display panel 10 and the output pin (output terminal) of each of the plurality of the driver ICs 14-1, 14-2, 14-3, ....

A liquid crystal display of, for example, the XGA display system will be first described by using Fig. 5. This liquid crystal display is the subject of European patent application number 99 909 300, from which the present application has been divided.

The liquid crystal display panel 10 has 1024 (namely, total 3072 = 1024 x 3) signal lines 12-1, 12-2, 12-3, ... every color of R, G, and B in case of the XGA display. On the other hand, it is assumed that, general driver ICs each having, for example, 120 output pins are used as driver ICs 14-1, 14-2, 14-3, ... and arranged in order in correspondence to the signal lines 12-1, 12-2, 12-3, ....

In this instance, now assuming that 25 general driver ICs each having 120 output pins are arranged, a fraction of 72 (= 3072 - 120 x 25) lines occurs in the signal lines. As a driver IC holding the 72 signal lines of such a fraction, a driver IC having 72 output pins is used instead of the general driver IC having the 120 output pins, and total 26 driver ICs 14-1, 14-2, 14-3, ..., and 14-26 including such a driver IC are arranged in order in the horizontal direction.

For example, as shown in Fig. 5, when the driver ICs are sequentially arranged, the driver IC having 72 output pins is used as, for example, a driver IC 14-26 which is arranged in the 26th order. That is, although the number of signal lines which are allocated to each of the other 25 driver ICs 14-1, 14-2, 14-3, ..., and 14-25 is equal to 120, the number of signal lines which are allocated to the 26th driver IC 14-26 is equal to 72.

The output pins of the 26 driver ICs 14-1, 14-2, 14-3, ..., and 14-26 arranged in this manner are connected to the signal lines 12-1, 12-2, 12-3, ... in connecting portions 16 on the liquid crystal display panel 10 through flexible cables 15, respectively, and apply a predetermined voltage to each pixel through the signal lines 12-1, 12-2, 12-3, ....

As mentioned above, in case of using, for example, the general driver ICs in which the numbers of output pins are the same as driver ICs 14-1, 14-2, 14-3, ..., when these driver ICs are sequentially arranged with a correspondence relation with each of the signal lines 12-1, 12-2, 12-3, ..., if a fraction occurs in the signal lines, by setting the number of output pins of one of the driver ICs 14-1, 14-2, 14-3, ... to such a fraction, no fraction finally occurs in the signal lines and the output pins of the driver ICs can be connected to the signal lines without causing a remainder. Thus, a surplus connecting region which does not contribute to the image display does not occur on the liquid crystal display panel 10.

Although the position where the driver IC holding the fraction of the signal lines is arranged is set to the end (the 26th IC in the drawing) in the drawing, it is not limited to the end position and can be arranged at any position. The numerical values shown in the drawing are a mere example and the device is not limited to these numerical values.

The first embodiment to which the invention is applied to a liquid crystal display of, for example, the XGA display system will now be described by using Fig. 6.

In case of the XGA display, the liquid crystal display panel 10 has 1024 (namely, total 3072) signal lines 12-1, 12-2, 12-3, ... every color of R, G, and B as mentioned above. Although a plurality of the driver ICs 14-1, 14-2, 14-3, ... are arranged for the 3072 signal lines 12-1, 12-2, 12-3, ..., in this instance, the number of output pins of the driver ICs 14-1, 14-2, 14-3, ... is set to a measure of the total number (namely, the number of horizontal display dots) of signal lines 12-1, 12-2, 12-3, ....

Since the total number of signal lines 12-1, 12-2, 12-3, ... is equal to 3072 in the XGA display, for example, the number of output pins of the driver ICs 14-1, 14-2, 14-3, ... is set to the measure of 3072, preferably, 512 (= $2^9$) as a power of 2. Thus, 6 (= 3072/512) driver ICs are necessary and it is sufficient to sequentially arrange the six driver ICs 14-1, 14-2, 14-3, ..., and 14-6 with the correspondence relation with each of the signal lines 12-1, 12-2, 12-3, ....

The output pins of the six driver ICs 14-1, 14-2, 14-3, ..., and 14-6 arranged in this manner are connected to the signal lines 12-1, 12-2, 12-3, ... in the connecting portions 16 on the liquid crystal display panel 10 through the flexible cables 15 and the driver ICs apply a predetermined voltage to each pixel through the signal lines 12-1, 1-2, 12-3, ....

As mentioned above, when the number of output pins of the driver ICs 14-1, 14-2, 14-3, ... is set, the number of output pins is set to the measure of the total number of signal lines 12-1, 12-2, 12-3, ... and the driver ICs of the number which is determined by the number of output pins are arranged, so that no fraction occurs in the signal lines and the output pins of the driver IC can be connected to the signal lines without causing a remainder. Thus, a surplus connecting region which does not contribute to the image display does not occur in the liquid crystal display panel 10.

The numerical values shown in the embodiment are a mere example and the invention is not limited to these numerical values. There is an advantage such that as the number of driver ICs is smaller, it is more advantageous for realization of low costs, and on the contrary, as it is larger, if a defective portion occurs in a part of the circuit, it is possible to cope with such a defect by exchanging only the IC including the defective portion. Therefore, when the number of output pins of the driver IC is set, it is sufficient to decide it in consideration of the number of driver ICs that is determined by the number of output pins or the like.

Although the embodiment has been described with respect to the case where the invention is applied to the XGA (1024 pixels x 768 pixels) display, the invention can be also applied to other display systems, for example, an NTSC (640 pixels x 480 pixels) display, a VGA (800 pixels x 600 pixels) display, an SXGA (1280 pixels x 1024 pixels) display, and a UXGA (1600 pixels x 1400 pixels) display.

Further, although the above embodiment has been described with respect to the case, as an example, where the invention is applied to the liquid crystal display in which there is the one-to-one correspondence relation between each output pin of the external driver ICs 14-1, 14-2, 14-3, ... and the signal lines 12-1, 12-2, 12-3, ..., the invention can be also applied to a liquid crystal display in which there is no one-to-one correspondence relation. That is, in a liquid crystal display using what is called a time-divisional driving method, there is no one-to-one correspondence relation between the output pins of the external driver IC and the signal lines and the invention can be applied to such a kind of liquid crystal display.

The time-divisional driving method is a driving method whereby a plurality of signal lines are set to one unit (block), signals which are supplied to the plurality of signal lines in one divided block are time-sequentially outputted from the driver IC, time-divisional switches are provided for the liquid crystal display panel while a plurality of signal lines are set to one unit, the time-sequential signals which are outputted from the driver IC are time-divided by the time-divisional switches and sequentially supplied to the plurality of signal lines. The number of output pins of the driver IC can be reduced by using the time-divisional driving method.

Fig. 7 is a wiring diagram of a liquid crystal display portion in a matrix type liquid crystal display using the time-divisional driving method. The matrix type liquid crystal display has a structure such that gate lines 41-1, 41-2, 41-3, ... as many as a plurality of rows and signal lines 42-1, 42-2, 42-3, ... as many as a plurality of columns are wired in a matrix shape on the surface of liquid crystal and a back light is arranged on the backside of the liquid crystal. Intersecting points between the gate lines 41-1, 41-2, 41-3, ... and the signal lines 42-1, 42-2, 42-3, ... become pixels and form a liquid crystal display panel 40. The pixels have a construction shown in, for example, Fig. 3.

One end of each of the gate lines 41-1, 41-2, 41-3, ... of a plurality of rows is connected to each output terminal of the corresponding row of a vertical driving circuit 43, respectively. The vertical driving circuit 43 is formed by a thin film transistor onto the same substrate as that of the liquid crystal panel, sequentially sends scanning pulses to the gate lines 41-1, 41-2, 41-3, ..., and selects each pixel on a row unit basis, thereby performing the vertical scan.

A plurality of driver ICs (only a driver IC 44 at the first stage is shown in Fig. 7) to apply a predetermined voltage according to pixel data to the signal lines 42-1, 42-2, 42-3, ... are provided as external circuits of the liquid crystal display panel 40. Digital image data which enables a display of, for example, 8 or more gradations and 512 or more colors is inputted to the driver IC 44. The driver IC 44 has a construction shown in, for example, Fig. 4.

An IC for dot inversion driving is used as a driver IC 44. To realize the dot inversion driving, the driver IC 44 generates a signal voltage in which an electric potential is inverted every odd and even number of output terminals. The dot inversion driving is a driving method of inverting the polarity of a voltage which is applied to an adjacent dot (pixel) and is a driving method which is preferable to improve the picture quality.

That is, by inverting the polarity of the voltage which is applied to the adjacent pixel, a diving potential from the signal line which is caused due to a cross capacitance between the signal line and the gate line is cancelled, so that the pixel potential is stably inputted and a flicker at the time of the display of the liquid crystal is reduced. Thus, the picture quality can be improved.

To further realize the time-divisional driving, the driver IC 44 has a construction such that a plurality of signal lines are set to one unit and the signals which are sent to the plurality of signal lines are time-sequentially outputted. In correspondence to it, analog switches (hereinafter, referred to as time-divisional switches) 46 having a CMOS, PMOS, or NMOS construction are provided between output lines 45-1, 45-2, 45-3, ... of the driver IC 44 and the signal lines 42-1, 42-2, 42-3, ....

Fig. 8 shows an example of a connecting construction of the time-divisional switches 46 in case of the 3-time-divisional driving corresponding to R, G, and B. In case of the 3-time-divisional driving, signal voltages of three pixels of R, G, and B are time-sequentially outputted through the output lines 45-1, 45-2, 45-3, ... from the output terminals of the driver IC 44.

Specifically speaking, as shown in a timing chart of Fig. 9, signals of pixels R1, G1, and B1 are outputted from an ODD terminal 1 to the output line 45-1 as signal outputs of the driver IC 44; likewise, signals of pixels R2, G2, and B2 are outputted from an EVEN terminal 1 to the output line 45-2; signals of pixels R3, G3, and B3 are outputted from an ODD terminal 2 to the output line 45-3; ....

On the other hand, every three time-divisional switches are provided for one output line in correspondence to the 3-time-division in a manner such that time-divisional switches 46-1, 46-2, and 46-3 are provided between the output line 45-1 and the three signal lines 42-1, 42-2, and 42-3; time-divisional switches 46-4, 46-5, and 46-6 are provided between the output line 45-2 and the three signal lines 42-4, 42-5, and 42-6; time-divisional switches 46-7, 46-8, and 46-9 are provided between the output line 45-3 and the three signal lines 42-7, 42-8, and 42-9; ....

A specific construction of a certain set of time-divisional switches 46-1, 46-2, and 46-3 will now be described by using a circuit diagram of Fig. 10.

The time-divisional switches 46-1, 46-2, and 46-3 comprise CMOS analog switches (transmission switches) in which p-channel MOS transistors and n-channel MOS transistors are connected in parallel and are formed by thin film transistors onto the same substrate as that of the liquid crystal display panel 40. Input terminals of the three time-divisional switches 46-1, 46-2, and 46-3 are connected in common and their common connecting point is connected to the output line 45-1.

Thus, signal potentials which are time-sequentially outputted from the driver IC 44 are inputted to input terminals of the three time-divisional switches 46-1, 46-2, and 46-3 via the output line 45-1. Each of output terminals of the time-divisional switches 46-1, 46-2, and 46-3 is connected to one end of each of the three signal lines 42-1, 42-2, and 42-3.

On the same substrate as that of the liquid crystal display panel 40, total six control lines 47-1 to 47-6 (every two control lines for one time-divisional switch) are wired along the wiring directions of the gate lines 41-1, 41-2, 41-3, .... Two control input terminals (namely, a gate of an n-channel MOS transistor and a gate of a p-channel MOS transistor) of the time-divisional switch 46-1 are connected to the control lines 47-1 and 47-2. Two control input terminals of the time-divisional switch 46-2 are connected to the control lines 47-3 and 47-4 and two control input terminals of the time-divisional switch 46-3 are connected to the control lines 47-5 and 47-6, respectively.

Although the connecting relation of the time-divisional switches 46-1, 46-2, and 46-3 to the six control lines 47-1 to 47-6 has been described here, the other time-divisional switches 46-4, 46-5, 46-6, ... also have substantially the same connecting relation with that mentioned above.

Control signals S1 to S3 and XS1 to XS3 to select the three time-divisional switches of each set are given from the outside to the six control lines 47-1 to 47-6, respectively. However, the control signals XS1 to XS3 are inversion signals of the control signals S1 to S3. The control signals S1 to S3 and XS1 to XS3 are signals for sequentially turning on the three time-divisional switches of each set synchronously with the time-sequential signal potentials which are outputted from the drive IC 44.

The time-divisional switches 46-1, 46-2, 46-3, 46-4, 46-5, 46-6, 46-7, 46-8, 46-9, ... of each set are formed in the liquid crystal display panel 40 by the thin film transistors having, for example, a bottom gate structure shown in Fig.

11A or a top gate structure shown in Fig. 11B together with a transistor or the like constructing the vertical driving circuit 43.

In the thin film transistor of the bottom gate structure shown in Fig. 11A, a gate electrode 52 is formed on a glass substrate 51, a polysilicon (Poly-Si) layer 54 is formed on the gate electrode 52 through a gate insulating film 53; and an interlayer insulating film 55 is further formed on the layer 54. A source region 56 and a drain region 57 comprising $n^+$ type diffusion layers are formed on the gate insulating film 53 on the side of the gate electrode 52. The source region 56 and drain region 57 have $n^-$ type low impurity concentration portions 56a and 57a, respectively. Reference numeral 58 denotes an interlayer insulating film. A source electrode 59 and a drain electrode 60 are connected to the $n^+$ type source region 56 and drain region 57 through opening portions 58a and 58b formed in the interlayer insulating film 58, respectively. Reference numeral 61 denotes an organic film.

In the thin film transistor of the top gate structure shown in Fig. 11B, a polysilicon layer 72 is formed on a glass substrate 71. A gate electrode 74 is formed on the layer 72 through a gate insulating film 73. An interlayer insulating film 75 is further formed on the gate electrode 74. A source region 76 and a drain region 77 comprising $n^+$ type diffusion layers are formed on the glass substrate 71 on the side of the polysilicon layer 72. The source region 76 and drain region 77 have $n^-$ type low impurity concentration portions 76a and 77a, respectively. A source electrode 78 and a drain electrode 79 are connected to the $n^+$ type source region 76 and drain region 77 through connecting holes 75a and 75b formed in the interlayer insulating film 75, respectively. Reference numeral 80 denotes an organic film.

The time-divisional switches 46-1, 46-2, 46-3, 46-4, 46-5, 46-6, 46-7, 46-8, 46-9, ... are sequentially turned on in response to gate selection signals S1, S2, and S3 (refer to the timing chart of Fig. 9) which are supplied from the outside, thereby 3-time-dividing the time-sequential signals which are generated from the driver IC 44 to the output lines 45-1, 45-2, 45-3, ... for one horizontal scanning period, and supplying the time-divided signals to the corresponding signal lines.

In case of the foregoing 3-time-divisional driving, since the time-dividing number is an odd number, as will be obviously understood from Fig. 12, the dot inversion driving in which the polarity is inverted between the adjacent pixels of one line is performed. Fig. 12 shows a writing state of the signal voltage into each pixel in case of the 3-time-divisional driving shown in Fig. 8. In Fig. 12, the lateral direction shows the scanning order and the vertical direction indicates the operating order of the time-divisional switches, respectively. H denotes a writing state of a high voltage and L indicates a writing state of a low voltage.

In Fig. 7, in case of inputting the signal potential from the driver IC 44 to the signal lines 42-1, 42-2, 42-3, ..., the signal line in which the time-divisional switch 46 is OFF is set into a high impedance state, it is easily influenced by an external diving potential or the like, and the electric potential of the signal line is likely to fluctuate. Therefore, for example, in case of a 4-time-division as shown in Fig. 13A or the like, since one pixel is not a set of R, G, and B, the potential fluctuation of the signal line of every color is not constant and it becomes a cause of a color variation in the vertical direction.

On the other hand, if the three signal lines of R, G, and B are 3-time-divided as shown in Fig. 13B, the potential fluctuation of the signal line of every color which is caused due to the external diving potential or the like becomes almost uniform, so that it is possible to construct such that a slight potential fluctuation is not emphasized. In other words, in case of R, the potential fluctuates in R; in case of G, the potential fluctuates in G; and in case of B, the potential fluctuates in B. Therefore, by providing an offset to a chrominance signal data which is supplied to the driver IC 44, the potential can be set to a predetermined signal potential. So long as a fluctuation of a source potential within a permission range, a deviation as a chromaticity signal does not occur.

As will be obviously understood from the above description, by applying the time-divisional driving to the liquid crystal display, the number of output pins of the driver IC 44 can be reduced. Specifically speaking, in case of the 3-time-divisional driving, since the number of output pins of the driver IC 44 can be reduced into 1/3 than that in the case where the time-divisional driving is not used, the size in the pin arranging direction of the driver IC can be reduced.

In this instance, as in the foregoing second embodiment, when considering the case of setting the number of output pins of the driver IC 44 to the measure of the total number of signal lines, if the number of output pins is made correspond to the numerical values in the second embodiment, the measure for the total number (3072) of signal lines is equal to 1536 (= 512 x 3). By the setting of the number of pins, it is possible to prevent that a surplus connecting region which does not contribute to the image display occurs in the connecting portions between the driver ICs and the signal lines.

Thus, in future, for the display system such as SXGA (super XGA), UXGA (ultra XGA), or the like in which there is a tendency of an increase in number of display pixels, a compact size can be realized as a liquid crystal display module while stably supplying an excellent picture quality by the dot inversion driving, and the multicolor display can be realized by a cheap liquid crystal display panel.

Although the embodiment has been described with respect to the XGA display system as an example, the invention can be similarly applied to each of the SHXGA (super half XGA) and HXGA (half XGA) display systems in which the numbers of pixels in the horizontal direction are the same.

The standard of the SHXGA display system is an image display standard of 1024 pixels x 480 pixels and the aspect ratio is set to 32 : 15. This is characterized in that an XGA standard signal can be displayed without laterally scrolling and a VGA (video graphics array) standard signal can be fully displayed. The standard of the HXGA display system is an image display standard of 1024 pixels x 384 pixels and the aspect ratio is set to 8 : 3. This is considered to be a portable terminal standard of the XGA standard.

As will be obviously understood from those display standard, since the number of pixels in the horizontal direction is equal to 1024 in each of the XGA, SHXGA, and HXGA display systems, the total number of signal lines in each system is equal to 3072 and the driver IC 44 to drive the signal lines can be considered in common.

In the field of the liquid crystal display, recently, the miniaturization of the apparatus, particularly, the realization of a narrow width of the liquid crystal display panel is actively progressed. To realize the narrow width of the liquid crystal display panel, it is sufficient to reduce the size of the frame portion (hereinafter, abbreviated to a frame size) of the liquid crystal display panel as small as possible. Under the existing manufacturing technique, the frame size of 4 mm or less is a target size as an example.

For example, in case of using a TAB (Tape Automated Bonding) system as a method of installing the driver IC 44 as an external circuit of the liquid crystal display panel, since a pad size of TAB is equal to about 2 mm at present, in order to satisfy the frame size of 4 mm or less, it is necessary that a size of region which is needed for wiring and connection between the TAB and the time-divisional switches 46-1, 46-2, 46-3, 46-4, 46-5, 46-6, 46-7, 46-8, 46-9, and the like is suppressed to 2 mm or less.

In the first embodiment in which the number of output pins of the driver IC is set to the measure of the total number of signal lines in consideration of the above problems, a specific example regarding the setting of the number of driver ICs will now be described hereinbelow every display with respect to the case of the 3-time-divisional driving of R, G, and B as an example.

The case of a liquid crystal display system of the SXGA display system will be first described. The standard of the SXGA display system is a standard of 1280 pixels x 1024 pixels and one pixel consists of 3 dots of R, G, and B, so that the total number of signal lines (= the number of dots in the horizontal direction) is equal to 3840 (= 1280 x 3).

According to the existing patterning technique, since a wiring width is equal to about 4 $\mu$m and a wiring interval is equal to about 3.5 $\mu$m, a space of about 7.5 $\mu$m is needed per wiring. As mentioned above, when it is desired to set the frame size of the liquid crystal display panel to 4 mm or less, since a space which is permitted for wiring and connection is equal to 2 mm or less, the numerical value of about 266 ($\fallingdotseq$ 2 mm/7.5 $\mu$m) is derived as the maximum number of lines which can be wired in the frame portion.

However, since a wiring pitch of the signal lines is wider than a pitch of the output pins of the driver IC, the flexible cables for electrically connecting the output pins of the driver ICs and the time-divisional switches are divided into halves on the right and left sides in the frame portion of the liquid crystal display panel. Thus, the maximum number of output pins of the driver IC is equal to a value that is twice as large as the maximum number of lines (266) which can be wired, namely, about 532.

As will be obviously understood from the above description, in case of the SXGA display system, since the points that the number of output pins is equal to or less than 532 and is equal to the measure of the number of signal lines (3840 lines) become conditions, for example, 320 is set as the number of output pins of the driver IC. In case of the 3-time-divisional driving, since it is sufficient to set the total number of output pins of the driver IC to 1/3 of the number of signal lines (3840 lines), 4 (= 1280/320) is set as the number of driver ICs.

That is, in the liquid crystal display of the SXGA display system, when the 3-time-divisional driving is used, as shown in Fig. 14, four driver ICs 44-1 to 44-4 each having 320 output pins are arranged at a predetermined interval on an external substrate (not shown) different from the liquid crystal display panel 40 and connected to the time-divisional switches (not shown) in the connecting portion 16 of the frame of the liquid crystal display panel 40 through the flexible cables 15.

By using the 3-time-divisional driving is used in the liquid crystal display of the SXGA display system as mentioned above, for example, if 320 is set as the number of output pins of the driver IC, it is sufficient to use four driver ICs. Therefore, if the general driver IC of, for example, 384 pins is used without using the 3-time-divisional driving, a standby electric power is equal to 2/5 or less than that in the case where 10 (= 3840/384) driver ICs are needed.

It also contributes to the reduction of costs of the driver IC. Moreover, in future, the more number of pins of the driver IC is expected in association with the progress of the integrated circuit technique and the number of driver ICs can be set to 3 or less in accordance with it, so that the further reduction of the electric power consumption and the product costs can be expected.

The horizontal scanning time of the SXGA display system is determined to 21.537 $\mu$sec, 15.63 $\mu$sec, 12.504 $\mu$sec, and 10.971 $\mu$sec on the standard. To realize the constructions of Figs. 10 and 14 under the above standard, for example, it is necessary to match with 10.971 $\mu$sec as the shortest horizontal scanning time.

Since the 3-time-division is now performed, it is necessary to select time that is equal to or shorter than 1/3 of 10.971 $\mu$sec. That is, it is necessary that the sampling time is equal to 3.657 $\mu$sec or less. Similarly, if the horizontal scanning time is equal to 21.537 $\mu$sec, the sampling time is equal to 7.179 $\mu$sec or less; if it is equal to 15.63 $\mu$sec, the

sampling time is equal to 5.21 μsec or less; and if it is equal to 12.504 μsec, the sampling time is equal to 4.168 μsec or less.

In a timing chart of Fig. 15, with respect to the leading and trailing times (throughrate) of output waveforms which are outputted from the driver IC 44 to the signal lines, since it is necessary to finish them within the sampling time, it is necessary to set to a period shorter than a selecting period of time. It is defined that the leading and trailing times of the driver IC 44 are set to the time which varies within a range of 0% ⇔ 99.75%. For example, when a signal amplitude of the signal line is equal to 9V, there is an error of 0.00225V.

After the time-divisional switch of R was selected, it is necessary to provide a blanking period for a period of time until the second time-divisional switch is selected. This is because the signal potential of the non-selection signal line in which the electric potential has been determined fluctuates. When the selection signal line connected to the time-divisional switch increases in size, a parasitic capacitance or a wiring resistance certainly exists and a delay occurs in the selection line time due to it. Thus, since the adjacent time-divisional switches are simultaneously turned on/off, the signal potential of the non-selection signal line cannot be decided.

This is shown in waveform diagrams of Figs. 16A, 16B, and 16C. Fig. 16A shows a period which is selected by the time-divisional switches at the input terminal, Fig. 16B shows a period which is selected by the time-divisional switches in the liquid crystal substrate, and Fig. 16C shows a signal output after the time-divisional switches, respectively. A solid line indicates a case where the blanking period is provided. A broken line shows a case where the blanking period is not provided.

As will be obviously understood from Fig. 16C, when the blanking period is not provided (broken line), the signal potential of the non-selection signal line in which the electric potential has been determined fluctuates as shown by an alternate long and short dash line. Therefore, when the liquid crystal display of the SXGA display system is manufactured, as shown in the timing chart of Fig. 15, it is necessary to set blanking periods (a), (b), and (C) which are equal to or shorter than the time of (scanning time in the horizontal direction - selecting time x 3)/3. In the blanking period (c), as shown in the timing in Fig. 15, a gate selecting pulse to select the gate line at each stage has to be switched.

Since a delay time also occurs with respect to the gate selecting pulse, the adjacent gate lines are simultaneously turned on/off, thereby causing a fluctuation of the pixel potential. To prevent it, the blanking period is also necessary in the switching period of time of the gate selecting pulse. Therefore, if the time of (scanning time in the horizontal direction - selecting time x 3)/3 is insufficient as a blanking period (c), the time longer than that is necessary. In the driving circuit of the existing selective switch, 40 nsec is necessary as a short blanking period and is the minimum value.

In a circuit construction of the liquid crystal pixel shown in Fig. 17, jitters of the gate lines 41-1, 41-2, 41-3, ... and periodic fluctuations of Cs lines 48-1, 48-2, 48-3, ... are induced as shown in a waveform diagram of Fig. 18 by a diving potential from the signal lines 42-1, 42-2, 42-3, 42-4, ... which are caused due to a parasitic capacitance Cgs between the gate lines 41-1, 41-2, 41-3, ... and the signal lines (source lines) 42-1, 42-2, 42-3, 42-4, ... and a parasitic capacitance Ccs between the Cs lines 48-1, 48-2, 48-3, ... to supply the common voltage VCOM to the counter electrodes of the pixels and the signal lines 42-1, 42-2, 42-3, 42-4, ....

Particularly, fluctuating potentials of the jitters of the Cs lines 48-1, 48-2, 48-3, ... are specified by Δs1, Δs2, and Δs3 shown in Fig. 19. Δs1, Δs2, and Δs3 denote potential differences between a crosstalk generating region and a non-generating region. It has been found that if the potential differences Δs1, Δs2, and Δs3 are equal to or less than 70 mV, they are not judged as an image. That is, at present, if such a condition is satisfied, they are not decided as a crosstalk in the lateral direction.

To prevent the jitters of the gate lines 41-1, 41-2, 41-3, ... and the periodic fluctuations of the Cs lines 48-1, 48-2, 48-3, ... which are caused due to the capacitance Cgs between the gate lines and the signal lines and the capacitance Ccs between the Cs lines and the signal lines, in the large liquid crystal display, as mentioned above, the dot inversion driving system in which the polarities between the adjacent pixels are inverted while the counter electrode is used as a reference is used. In case of the dot inversion driving system, the leading time and the trailing time become the times which cannot be ignored as compared with those in the conventional liquid crystal display in which the signal lines 42-1, 42-2, 42-3, ... are connected to the output pins of the driver IC 44 in a one-to-one correspondence relationship.

When the time-dividing number is equal to 3, the time necessary to settle the Cs lines 48-1, 48-2, 48-3, ... is equal to 1/3 of the conventional one and the conditions become severe. As a countermeasure, particularly, it is necessary to eliminate the crosstalks in the lateral direction which are caused due to the jitters of the Cs lines 48-1, 48-2, 48-3, .... For this purpose, as shown in a waveform diagram of Fig. 20, it is necessary to set the leading waveform and trailing waveform of the driver IC 44 to be symmetrical with respect to the time base, namely, to equalize the leading time and the trailing time.

As mentioned above, in the dot inversion driving, by setting the leading waveform and trailing waveform of the driver IC 44 to be symmetrical with respect to the time base, the fluctuating potential amount can be cancelled by the signals of the opposite polarities, so that most of the fluctuations of the gate lines 41-1, 41-2, 41-3, ... and Cs lines 48-1, 48-2, 48-3, ... are eliminated. As the fluctuation amount is smaller, the time that is required to settle the electric potentials of the Cs lines 48-1, 48-2, 48-3, ... becomes shorter.

Fig. 21 shows a simulation result in case of the SXGA display system of 17 inches as an example. When considering from the simulation result, it will be understood that it is desirable to set a time difference between 3 τrise (leading) and 3 τfall (trailing) to 500 nsec or less. It is, thus, necessary to satisfy the following condition.

$$\left| 3\ \tau\text{rise} - 3\ \tau\text{fall} \right| \leq 500\ \text{nsec}$$

or

$$\left| 2\ \tau\text{rise} - 2\ \tau\text{fall} \right| \leq 500\ \text{nsec}$$

where, $\tau$ is constant at 0.5 $\mu$sec, $3\tau$ indicates a transition from 0% to 90%, and $2\tau$ indicates a transition from 0% to 86%, respectively.

As a condition showing that the leading waveform and the trailing waveform are symmetrical, a point that a displacement time of 0% ⇔ 63%, a displacement time of 0% ⇔ 86%, a displacement time of 0% ⇔ 95%, a displacement time of 0% ⇔ 98%, a displacement time of 0% ⇔ 99.3%, and a displacement time of 0% ⇔ 99.8% are the same becomes a condition. Fig. 22 shows an example of numerical values of the periods in case of manufacturing the liquid crystal display of the SXGA display system.

The case of the liquid crystal display of the UXGA display system will now be described. Since the standard of the UXGA display system is a standard of 1600 pixels x 1200 pixels and one pixel consists of 3 dots of R, G, and B, the total number of signal lines is equal to 4800 (= 1600 x 3).

Now, assuming that, for example, 320 is set as the number of output pins of the driver IC under conditions similar to those in case of the SXGA display system mentioned above, in case of the 3-time-divisional driving, it is sufficient to set the total number of output pins of the driver IC to 1/3 of the number of signal lines (4800 lines). Therefore, in the embodiment, 5 (= 1600/320) is set as the number of driver ICs.

That is, in case of using the 3-time-divisional driving in the liquid crystal display of the UXGA display system, as shown in Fig. 23, five driver ICs 44-1 to 44-5 each having 320 output pins are arranged at a predetermined interval on an external substrate (not shown) different from the liquid crystal display panel 40 and connected to the time-divisional switches (not shown) in the connecting portions 16 of the frame of the liquid crystal panel 40 through the flexible cables 15.

By using the 3-time-divisional driving in the liquid crystal display of the UXGA display system as mentioned above, for example, when the number of output pins of the driver IC is set to 320, it is sufficient to use five driver ICs. Therefore, the standby electric power is reduced into 5/13 or less as compared with that in the case where 13 (= 4800/384 = 12 and a remainder 92) driver ICs (one of them uses only 92 pins) are necessary when the general driver IC of, for instance, 384 pins is used.

It also contributes to the reduction of the costs of the driver IC. Moreover, in future, in association with the progress of the integrated circuit technique, the more number of pins of the driver IC is expected and four or less driver ICs can be also set in accordance with it. Thus, the further reduction of the electric power consumption and the product costs can be expected.

The horizontal scanning times of the UXGA display system are determined to 16 $\mu$sec, 13.333 $\mu$sec, 12.308 $\mu$sec, 11.429 $\mu$sec, 10.667 $\mu$sec, 10 $\mu$sec, and 9.412 $\mu$sec on the standard. In order to realize the constructions of Figs. 10 and 23 under this standard, for example, it is necessary to match with, for instance, 9,412 $\mu$sec as the shortest horizontal scanning time. Since the 3-time-division is now performed, it is necessary to select the time that is equal to or shorter than 1/3 of 9.412 $\mu$sec. That is, it is necessary to set the sampling time to 3.137 $\mu$sec or less.

Similarly, if the horizontal scanning time is equal to 16 $\mu$sec, the sampling time is equal to 5.333 $\mu$sec or less; if it is equal to 13.333 $\mu$sec, the sampling time is equal to 4.444 $\mu$sec or less; if it is equal to 12.308 $\mu$sec, the sampling time is equal to 4.103 $\mu$sec or less; if it is equal to 11.429 $\mu$sec, the sampling time is equal to 3.810 $\mu$sec or less; if it is equal to 10 $\mu$sec, the sampling time is equal to 3.333 $\mu$sec or less.

The setting of the leading and trailing times (throughrate) of the output waveform of the driver IC 44 and the blanking period and the symmetry between the leading waveform and the trailing waveform of the output of the driver IC 44 are similar to those in the case of the foregoing SXGA display system. Fig. 24 shows an example of numerical values of the period of time in case of manufacturing the liquid crystal display of the UXGA display system.

The case of the liquid crystal display of each of the display systems of SXGA and UXGA has been described above. The case of a liquid crystal display of each of the display systems of VGA, HVGA (half VGA), and QVGA (quarter VGA) will now be described.

First, the case of the liquid crystal display of the VGA display system will be described. The standard of the VGA display system is a standard of 640 pixels x 480 pixels and one pixel consists of 3 dots of R, G, and B, so that the total number of signal lines is equal to 1920 (= 640 x 3).

It is now assumed that, for example, the number of output pins of the driver IC is set to 320 under conditions similar to those in the case of each display system of SXGA and UXGA mentioned above. In case of the 3-time-divisional driving, since it is sufficient to set the total number of output pins of the driver IC to 1/3 of the number of signal lines (4800 lines), the number of driver ICs is set to 2 (= 640/320) in the embodiment.

That is, when the 3-time-divisional driving is used in the liquid crystal display of the VGA display system, as shown in Fig. 25, the two driver ICs 44-1 and 44-2 each having 320 output pins are arranged at a predetermined interval on an external substrate (not shown) different from the liquid crystal display panel 40 and connected to the time-divisional switches (not shown) in the connecting portions 16 of the frame of the liquid crystal display panel 40 through the flexible cables 15.

As mentioned above, by using the 3-time-divisional driving in the liquid crystal display of the VGA display system, for example, when the number of output pins of the driver IC is set to 320, it is sufficient to use two driver ICs. The standby electric power is reduced into 1/3 or less as compared with that in the case where 6 (= 1920/384 = 5 and a remainder 10) driver ICs (one of them uses only 10 pins) are necessary when the 3-time-divisional driving is not used and the general driver IC of, for instance, 384 pins is used.

It also contributes to the reduction of the costs of the driver IC. Moreover, in future, in association with the progress of the integrated circuit technique, the more number of pins of the driver IC is expected and one driver IC can be also set in accordance with it. Thus, the further reduction of the electric power consumption and the product costs can be expected.

The standard of the HVGA display system is a standard of 640 pixels x 240 pixels and the number of pixels in the horizontal direction is the same as that of the VGA display system, so that the total number of signal lines is also equal to 1920. Therefore, if the number of output pins of the driver IC is set to, for example, 320, the number of driver ICs which are set is also equal to 2.

On the other hand, the standard of the QVGA display system is a standard of 320 pixels x 240 pixels and the total number of signal lines is equal to 960. Now, assuming that the number of output pins of the driver IC is set to, for example, 320, in case of the 3-time-divisional driving, it is sufficient to set the total output pins of the driver IC to 1/3 of the number of signal lines (960 lines). Therefore, in the QVGA display system, as shown in Fig. 26, the number of driver ICs is set to 1 (= 320/320).

For example, in the standard IBM VGA (mode-4) display system of the VGA standard, the horizontal scanning time is equal to 31.778 μsec. Since the 3-time-division is performed, it is necessary to select the time that is equal to or less than 1/3 of 31.778 μsec. That is, it is necessary to set the sampling time to 10.59 μsec or less. In the QVGA display system, for example, now assuming that the horizontal scanning time is set to 63 μsec, it is necessary to set the sampling time to 10.59 μsec or less in the 3-time-division.

The setting of the leading and trailing times (throughrate) of the output waveform of the driver IC 44 and the blanking period and the symmetry between the leading waveform and the trailing waveform of the output of the driver IC 44 are similar to those in the case of the foregoing SXGA display system. Fig. 27 shows an example of numerical values of the period of time in case of manufacturing the liquid crystal display of each display system of VGA and QVGA.

As mentioned above, for example, in the 3-time-divisional driving, when the frame size of the liquid crystal display panel 40 is specified, the number (n) of output pins of the driver IC 44 is determined on the basis of the specified frame size by the number of lines which can be wired to the wiring region of the frame portion. Now, assuming that the total number of signal lines which is determined by the display system is labelled as N, by setting the number of driver IC 44 to N/n, the number of driver ICs can be remarkably reduced as compared with that in the case where the time-divisional driving is not used and the standby electric power can be fairly reduced, so that the electric power consumption of the whole liquid crystal display can be reduced.

In the blanking periods (a), (b), and (c) in the timing chart of Fig. 15 without limiting to the display system, the time-divisional switches (analog switches) are OFF and the electric potentials of the signal lines have been determined. Therefore, they are not influenced by an output from the driver IC as an external IC. Thus, when the output circuit of the driver IC is driven in the blanking periods (a), (b), and (C), the electric power is consumed in vain.

Fig. 4 shows an example of an internal construction of the driver IC. However, actually, as shown in Fig. 28, an output circuit 36 is usually arranged at the post stage of the D/A converter 35. It is, therefore, assumed that the output circuit 36 is made inoperative for the blanking periods (a), (b), and (c), thereby reducing the electric power consumption. As shown in Fig. 29, the output circuit 36 has a circuit construction of, for instance, a voltage follower comprising an operational amplifier and an output buffer.

In the output circuit 36 of the voltage follower circuit construction, for example, when a power source of the voltage follower is turned off for the blanking periods (a), (b), and (c), no current flows in the operational amplifier portion and an output enters a high impedance state. As mentioned above, by making the output circuit 36 inoperative for the blanking periods (a), (b), and (c), the electric power consumption can be reduced.

The writing of data into the driver IC to drive the signal lines will now be described. Ordinarily, as shown in Fig.

30, two memory circuits (1) 81 and (2) 82 each having a storage capacity corresponding to one line are connected to the liquid crystal display panel 40 through, for example, three driver ICs 44-1, 44-2, and 44-3.

First, data of one line is stored into the memory circuit 81 and, after that, a switch 83 is switched, and while data is stored into the memory circuit 82 for a period of time of next one line, only R is selected by a switch 85 that is interlocked with the switch 83. R data as much as one line is read out from the memory circuit 81 through a switch 84-1 and written into the driver ICs 44-1, 44-2, and 44-3. Subsequently, only G is selected and G data as much as one line is similarly written. Finally, only B is selected and B data as much as one line is similarly written.

In the next 1-line period, the memory circuits 81 and 82 are switched and a procedure similar to that mentioned above is repeated, thereby constructing an image. Generally, when the data as much as the number of horizontal dots is transferred one dot by one to the driver IC at the first stage, the data is sent like beads and the data of one line is set into a plurality of driver ICs. At this time point, by writing the data of one line into the liquid crystal display panel 40 in a lump, an image is formed every line per color. By repeating the above operations the number of times (the number of vertical pixels x 3 times), one image is constructed.

However, in association with the recent large number of pixels of the liquid crystal display, the number of pixels in the horizontal direction also increases and, at the same time, a transfer rate of video data also rises and the writing time to the liquid crystal display panel also becomes short. For example, when considering the liquid crystal display of the SXGA display system, the data transfer rate of the video data is equal to about 200 MHz and the driver IC which can write the data at this speed does not exist at present.

In the embodiment, therefore, by using a method of simultaneously writing different data into a plurality of driver ICs, it is enabled to use even the existing driver ICs. Fig. 31 shows an example of a specific construction to realize it. In the example, to easily explain, explanation will be made on the assumption that the number of horizontal pixels is set to 30 (total 90 dots for R, G, and B) and the number of shift registers 31 (refer to Fig. 28) in each driver IC is set to 10, respectively.

As shown in Fig. 31, two memory circuits (1) 81 and (2) 82 each having a storage capacity corresponding to one line are provided. The video data is supplied to the memory circuit 81 or 82 via the switch 83 to switch those memory circuits. Switches 84-1 to 84-6 for switching the colors of R, G, and B are provided on the output sides of the memory circuits 81 and 82 in a manner such that one switch is provided for every three terminals. Switches 85-1 to 85-3 each for switching again the memory circuits 81 and 82 are further provided at the post stage of the switches 84-1 to 84-6. Selection outputs of the switches 85-1 to 85-3 are supplied to the driver ICs 44-1 to 44-3, respectively.

Outputs of R, G, and B of the same number as that of driver ICs exist in the memory circuits 81 and 82 and are constructed so as to sequentially output the data of 1 to 10 dots, 11 to 20 dots, and 21 to 30 dots. The switch 83 arranged at the front stage of the memory circuits 81 and 82 and the switches 85-1 to 85-3 arranged at the post stage of the memory circuits 81 and 82 are interlocked with each other. When one of the switches 83 and the switches 85-1 to 85-3 selects the memory circuit 81, the other selects the memory circuit 82.

In the above construction, since the switch 83 has initially been switched to the memory circuit 81 side, the video data which is inputted from the outside is stored into the memory circuit 81 through the switch 83 by an amount of one line. After that, since the switch 83 is switched to the memory circuit 82 side, the video data of next one line is stored into the memory circuit 82.

At this time, the memory circuit 81 outputs the data of the first to the 10th dots to the driver IC 44-1, outputs the data of the 11th to the 20th dots to the driver IC 44-2, and outputs the data of the 21st to the 30th dots to the driver IC 44-3, respectively. In the next one line, the memory circuits 81 and 82 are switched and the operation similar to that mentioned above is performed and repeated, so that one image is constructed.

As mentioned above, the data of one line is first stored into the memory circuit 81 and while the data is stored into the memory circuit 82 for the next 1-line period, only R is selected by the switches 84-1 to 84-3, the R data as much as one driver IC is read out from the memory circuit 81 and written into the relevant driver IC. At the same time, the relevant data is also read out and written into another driver IC. By also writing the relevant data by a similar method with respect to G and B, the different data can be simultaneously written into each of the driver ICs.

Consequently, now assuming that the number of driver ICs is equal to n, the speed at which the data is written into each driver IC can be reduced into 1/n. Therefore, for example, if the transfer rate of the video data is equal to 200 MHz and the number n of driver ICs is equal to 3, the data can be processed by the driver IC having an operating speed of about 67 MHz and it is possible to sufficiently cope with such a situation by the existing driver ICs. Since the writing time that is required to write all of the data of one line into each driver IC can be reduced into 1/n, the writing time to the liquid crystal display panel can be extended by only the time corresponding to such a reduced writing time.

In the conventional liquid crystal display, however, voltage-transmittance characteristics of each of R, G, and B do not coincide. This is because since the wavelength differs every color, a difference of refractive indices in the liquid crystal molecule occurs in dependence on the wavelengths, so that the voltage-transmittance characteristics of R are deviated to the negative voltage side as compared with those of B.

Figs. 32A and 32B show characteristics curves (V-T curves) of the transmittance of the liquid crystal and the voltage to be applied to the liquid crystal in case of using a TN (twist nematic) liquid crystal. As will be obviously understood from the characteristics diagram of Fig. 32A, usually, the V-T curve is shifted in R (transmission wavelength is 600 to 660 nm), G (transmission wavelength is 530 to 550 nm), and B (transmission wavelength is 370 to 460 nm).

This is because, there is the difference of the refractive indices of the liquid crystal molecule in dependence on the wavelength. Since the refractive index of R of a longer wavelength is smaller, when the voltage is applied to the liquid crystal, the rotation of 90° of the light due to the liquid crystal is soon lost. Since the refractive index of B is large, the rotation of 90° of the light is maintained to the last. Therefore, in the V-T curve, even if the same voltage is applied, a difference of the transmittance occurs.

In the liquid crystal display according to the invention with the construction such that the time-divisional switches (analog switches) are arranged in the horizontal direction in the liquid crystal substrate, the signal lines other than the selected switches are in a floating state. In this state, the signal lines are influenced by the diving of the signal potential between the adjacent signal lines. That is, an interline capacitance exists between the signal lines of the pixel. In Figs. 33A, 33B, and 33C showing equivalent circuits around the time-divisional switches, for example, when the switch S2 is selected (Fig. 33B) after the switch S1 was selected (Fig. 33A), the signal at the "H" level of the switch S2 dives into the switch S1 and the held voltage is increased by only an amount of the diving capacitance.

Now, assuming that a capacitance between the signal lines is set to Csig1 and a capacitance of one signal line is set to Csig2, a voltage ΔV by the diving is obtained by

$$\Delta V = Vsig \times Csig1/(Csig1 + Csig2) \tag{1}$$

where, Vsig denotes an amplitude voltage of the signal voltage which is inputted to the selected signal line. It is sufficient to decide a value of the amplitude voltage so as to just complement a shift amount of the applied voltage in a state of the same transmittance of halftone on the V-T curve of the liquid crystal.

A shift amount of the voltages of R and B is equal to 0.3V and is allocated to the voltage ΔV due to the diving. According to the 1HVCOM (common) inversion driving method, since the voltage of the same polarity is applied to the signal line for a 1H time, with respect to the switch S1 which has previously been selected, the held electric potential of the signal line increases when the next switch S2 is selected.

The switch S3 is subsequently selected (Fig. 33C). This means that the diving potential is inputted from a switch S3' adjacent to the switch S1. Finally, the signal lines are influenced by the diving potential between the signal lines twice with respect to the switch S1 and once with regard to the switch S2.

A method of complementing the voltage shift of the V-T curve depending on the color of the liquid crystal by paying attention to such a phenomenon will now be described. As for the 1H inversion driving method, as will be obviously understood from the timing chart of Fig. 34, the signal lines are arranged in a manner such that the signal line which is selected at first is set to B, the signal line which is selected at the second time is set to G, and the signal line which is selected at the third time is set to R, thereby performing the complementing of the V-T curve mentioned before.

In case of performing the dot inversion driving, since the signals of the opposite polarities are always applied to the adjacent signal lines, as a signal potential (amplitude potential), the diving voltage is generated in a decreasing direction. That is, as shown in Figs. 35A, 35B, and 35C, when the signal is written at the "H" level into the switch S1 (Fig. 35A) and, thereafter, when the signal is written at the "L" level into the switch S2 (Fig. 35B), the electric potential at the "L" level dives into the non-selected switch S1. After that, the signal at the "H" level is written into the switch S3 (Fig. 35C). However, a diving potential at the "H" level similarly occurs for a switch S1' adjacent to the switch S3.

However, the switch S3' adjacent to the switch S1 is set to the "L" level because of the dot inversion driving. This "L" level signal dives into the switch S1 and the voltage further decreases. Finally, the voltage to reduce the signal voltage occurs twice for the switch S1 selected first. The voltage to reduce the signal voltage occurs once for the switch S2.

To complement the voltage shift in the V-T curves of R, G, and B of the liquid crystal, as will be obviously understood from a timing chart of Fig. 36, it is desirable to set the signal line to be selected first to R, to set the second signal line to G, and to set the third signal line to B.

By using the above method, as shown in Fig. 32B, the characteristics curve of the voltage-transmittance at the half-tone is complemented and an image can be precisely displayed in accordance with the image signal. Figs. 37A and 37B show relations between the pixel array and the scanning direction of the time-divisional switches according to the invention. Fig. 37A shows the case of the 1H inversion driving method and Fig. 37B shows the case of the dot inversion driving method, respectively.

The above method can present an extremely large effect from a viewpoint that since the capacitance existing between the signal lines is actively used for complementing the voltage-transmittance characteristics of the liquid crystal, a complicated circuit construction is not needed, and the invention can be accomplished by setting only the color array to a predetermined order.

It is, however, necessary that the capacitance Csig1 between the signal lines and the capacitance Csig2 of the signal line itself satisfy the condition of

$$\Delta V = Vsig \times Csig1/(Csig1 + Csig2) \le \text{(the voltage difference between}$$

$$\text{R and G of the voltage-transmittance characteristics in the liquid crystal)}$$

For example, now assuming that the voltage difference between R and G of the voltage-transmittance characteristics in the liquid crystal is equal to 0.15V and the amplitude voltage Vsig of the signal voltage which is inputted to the selected signal line is equal to 9V, in order to correct it, it is sufficient to design such that

$$Csig1/(Csig1 + Csig2) = 0.017$$

As mentioned above, in the liquid crystal display of each display system, by generating the signal potential so as to correct the curve of the voltage-transmittance (V-T) characteristics of R, G, and B from the driver IC 44, the transmittances of R, G, and B at a position near the half-tone coincide, so that a color can be more precisely expressed in accordance with the image signal. Since a complicated circuit construction is unnecessary, the color precision can be improved without deteriorating the manufacturing yield.

In the liquid crystal display according to the invention, since the number of output terminals of each of a plurality of driver circuits is set to the measure of the total number of signal lines as many as a plurality of columns, no fraction occurs in the signal lines and the output terminals of the driver circuits can be connected to the signal lines without causing a remainder in the output terminals. Therefore, a surplus connecting region which does not contribute to the image display is not caused on the liquid crystal display panel, so that the width in the horizontal direction of the liquid crystal display panel can be narrowed.

**Claims**

**1.** A liquid crystal display comprising:

a display portion in which a plurality of pixels are two-dimensionally arranged at intersecting points of gate lines as many as a plurality of rows and signal lines as many as a plurality of columns which are wired in a matrix shape; and
a plurality of driver circuits for applying a signal potential to each pixel in said display portion through the signal lines of said plurality of columns,

**characterized in that** the number of output terminals of each of said plurality of driver circuits is set to a measure of the total number of signal lines of said plurality of columns.

**2.** A display according to claim 1, **characterized in that** the number of output terminals of each of said plurality of driver circuits is set to a same number.

**3.** A display according to claim 1, **characterized in that** the number of output terminals of each of said plurality of driver circuits is set to a power of 2.

**4.** A display according to claim 1, **characterized in that** said plurality of driver circuits are driver ICs arranged in an outside of a transparent insulating substrate on which said display portion is formed.

**5.** A display according to claim 1, **characterized by** comprising:

a memory circuit for temporarily storing data to be written into said plurality of driver circuits; and

a control circuit for controlling said plurality of driver circuits so as to simultaneously write different data from said memory circuit.

**6.** A display according to claim 2, **characterized in that** when a size of a frame portion adjacent to said display portion is specified, the number (n) of output terminals of each of said plurality of driver circuits is determined on the basis of said specified frame size by the number of lines which can be wired into a wiring region of said frame portion.

**7.** A display according to claim 6, **characterized in that** when it is assumed that the total number of signal lines of said plurality of columns which is decided by a display system is set to N, the number of said driver circuits is set to N/n.

**8.** A display according to claim 1, **characterized by** comprising:

time-divisional switches for time-divisionally sending a signal potential which is outputted from each of said plurality of driver circuits to the signal lines of said plurality of columns within one horizontal scanning period.

**9.** A display according to claim 8, **characterized in that** a leading waveform and a trailing waveform of a signal output waveform of each of said plurality of driver circuits are symmetrical with respect to a time base.

**10.** A display according to claim 8, **characterized in that** a time-dividing number of said time-divisional switches is equal to 3.

**11.** A display according to claim 10, **characterized in that** a period of time which is selected by said time-divisional switches is equal to or shorter than 1/3 of a horizontal scanning period.

**12.** A display according to claim 11, **characterized in that** a leading time and a trailing time of each of said plurality of driver circuits are equal to or shorter than the period of time which is selected by said time-divisional switches.

**13.** A display according to claim 11, **characterized in that** a blanking period which is caused for the period of time selected by said time-divisional switches is equal to or shorter than (a horizontal scanning period - the period of time selected by the time-divisional switches x 3) /3.

**14.** A display according to claim 13, **characterized in that** said plurality of driver circuits have a function to stop the operation of their output circuit for said blanking period.

**15.** A display according to claim 10, **characterized in that** said plurality of driver circuits generate a signal potential so as to correct shift amounts of curves of voltage-transmittance characteristics of R (red), G (green), and B (blue) by diving to said time-divisional switches.

**16.** A display according to claim 10, **characterized in that** in a 1H (H denotes a horizontal scanning period) inversion driving or a 1H common inversion driving, the signal line which is selected first by said time-divisional switches is a line of blue, the signal line which is selected at the second time is a line of green, and the signal line which is selected at the third time is a line of red.

**17.** A display according to claim 8, **characterized in that** in a dot inversion driving, the signal line which is selected first by said time-divisional switches is a line of red, the signal line which is selected at the second time is a line of green, and the signal line which is selected at the third time is a line of blue.

**18.** A display according to claim 10, **characterized in that** time-division of said time-divisional switches distribute signals to R (red), G (green), and B (blue) constituting one pixel.

**19.** A display according to claim 10, **characterized in that** said plurality of driver circuits generate a signal potential so as to correct shift amounts of curves of voltage-transmittance characteristics of R (red), G (green), and B (blue) by diving to said time-divisional switches, and time-division of said time-divisional switches distribute signals to R (red), G (green), and B (blue) constituting one pixel.

# Fig. 1

SURPLUS CONNECTING REGION WHICH DOES
NOT CONTRIBUTE TO IMAGE DISPLAY

101

| DRIVER IC | DRIVER IC | DRIVER IC | DRIVER IC | DRIVER IC |

103

104

EFFECTIVE DISPLAY
REGION

102 LCD PANEL

16

Fig. 2

EP 1 755 105 A2

# Fig. 3

EP 1 755 105 A2

# Fig. 4

HORIZONTAL SHIFT REGISTER CIRCUIT ～31

φHn

data1        data1

data2        data2

data3        data3

data4        data4

data5        data5

～32 SAMPLING SWITCHES      33

| Vdd | LEVEL SHIFTER | Vdd |
|---|---|---|
| Vss | | Vss |

| Vdd | DATA LATCH CIRCUIT | Vdd |
|---|---|---|
| Vss | | Vss |

34

| Vdd | D/A CONVERTING CIRCUIT | Vdd |
|---|---|---|
| REFERENCE VOLTAGE LINE | | 35 |
| Vss | | Vss |

ODD EVEN ODD EVEN ODD EVEN ODD EVEN

Fig. 5

## Fig. 6

14—1  14—3  14—5  14—6

DRIVER IC   DRIVER IC   · · · · ·   DRIVER IC   DRIVER IC

15

16

| 512 PINS | 512 PINS | | 512 PINS | 512 PINS |

XGA DISPLAY (1024 × 768 PIXELS)

EFFECTIVE DISPLAY REGION

10 LCD PANEL

EP 1 755 105 A2

# Fig. 7

44

IMAGE DATA → DRIVER IC

OEO ·····

40 LCD PANEL

46 TIME-DIVISIONAL SWITCH

45-1

45-3

45-2 ······

43

VERTICAL DRIVING CIRCUIT

41-1
41-2
41-3

42-1
42-2
42-3    42-4
42-6
42-5

## Fig. 8

EXTERNAL IC OUTPUT

| ODD | EVEN | ODD | EVEN | ODD |
|---|---|---|---|---|
| 45-1 | 45-2 | 45-3 | | |

46-1 46-2 46-3 46-4 46-5 46-6 46-7 46-8 46-9

42-1 42-2 42-3 42-4 42-5 42-6 42-7 42-8 42-9

COLOR R1  G1  B1  R2  G2  B2  R3  G3  B3  R4  G4  B4  R5  G5  B5

EP 1 755 105 A2

# Fig. 9

SIGNAL OUTPUT
OF DRIVER IC:

ODD1    R1    G1    B1

EVEN1    R2    G2    B2

ODD2    R3    G3    B3

GATE SELECTION
SIGNAL

S1

S2

S3

SIGNAL OUTPUT
AFTER SWITCHING

R1

G1

B1

R2

G2

B2

R3

G3

B3

# Fig. 10

SIGNAL POTENTIAL

45-1

47-1 S1
47-2 XS1
47-3 S2
47-4 XS2
47-5 XS3
47-6 XS3

46 TIME
DIVISIONAL
SWITCH

46-1   46-2   46-3

R  42-1   G  42-2   B  42-3

20

21

41-1

22   23

41-2

41-3

VCOM

# Fig. 11A

59   58a   58   54   55   58b   60   61

56(n⁺)   53   52   51   57a(n⁻)   57(n⁺)

# Fig. 11B

78   75a   74   75   75b   79   80

76(n⁻)   76a(n⁻)   72   73   77a(n⁻)   77(n⁺)   71

# Fig. 12

SCANNING ORDER

| 1 | H |   |   | L |   | H |   | L |   | H |   |   | H |   |   |   |
|---|---|---|---|---|---|---|---|---|---|---|---|---|---|---|---|---|
| 2 |   | L |   |   | H |   | L |   |   | H |   |   |   | L |   |   |
| 3 |   |   | H |   | L |   |   | H |   |   | L |   |   |   | H |   |
| 1 | L |   |   | H |   | L |   |   | H |   |   | L |   |   |   |   |
| 2 |   | H |   |   | L |   | H |   |   | L |   |   | H |   |   |   |
| 3 |   |   | L |   |   | H |   | L |   |   | H |   |   | L |   |   |

# Fig. 13A

TABIC EXTERNAL DRIVER IC ~ 44

TIME-DIVISIONAL SWITCH

43

VERTICAL DRIVING CIRCUIT

R G B R G B R G B R G B R G B R G B

# Fig. 13B

TABIC EXTERNAL DRIVER IC ~ 44

TIME-DIVISIONAL SWITCH

43

VERTICAL DRIVING CIRCUIT

R G B R G B R G B R G B R G B R G B

# Fig. 14

44-1          44-2          44-3          44-4

| DRIVER IC | DRIVER IC | DRIVER IC | DRIVER IC |

40

15

16

320Pin    320Pin    320Pin    320Pin

1280line × 3RGB=3840line

1024line

SXGA DISPLAY

EFFECTIVE DISPLAY REGION

# Fig. 15

# Fig. 16A

PERIOD TO BE
SELECTED BY TIME-
DIVISIONAL SWITCH
AT INPUT TERMINAL

BLANKING PERIOD

SELECTING PERIOD    BLANKING PERIOD

SELECTING PERIOD

SELECTING PERIOD

# Fig. 16B

PERIOD TO BE SELECTED
BY TIME DIVISIONAL
SWITCH IN LIQUID
CRYSTAL SUBSTRATE

S1

S2

S3

STATE WHERE TIME-DIVISIONAL SWITCHES
ARE SIMULTANEOUSLY TURNED ON

# Fig. 16C

OUTPUT SIGNAL
AFTER SWITCHING

R1

CHANGE AMOUNT OF ELECTRIC
POTENTIAL OF SIGNAL LINE

CHANGE AMOUNT OF ELECTRIC
POTENTIAL OF SIGNAL LINE

G1

B1

Fig. 17

# Fig. 18

TRAILING
CHARACTERISTICS OF
DRIVER IC OUTPUT

LEADING
CHARACTERISTICS
OF DRIVER IC
OUTPUT

SYNTHETIC Cs,
FLUCTUATION OF
GATE LINE

Fig. 19

CROSSTALK GENERATING REGION

CROSSTALK NON-GENERATING REGION

Cs POTENTIAL
:1.5V

$\Delta s1$

$\Delta s2$

$\Delta s3$

TAB OUT

signal red

signal green

signal blue

# Fig. 20

TRAILING
CHARACTERISTICS
OF DRIVER IC
OUTPUT

LEADING
CHARACTERISTICS
OF DRIVER IC
OUTPUT

DISPLACEMENT TIME

SYNTHETIC Cs,
FLUCTUATION OF
GATE LINE

Fig. 21

EP 1 755 105 A2

## Fig. 22

| HORIZONTAL SCANNING TIME | 21.537 $\mu$ s | 15.63 $\mu$ s | 12.504 $\mu$ s | 10.971 $\mu$ s |
|---|---|---|---|---|
| TIME TO BE SELECTED BY TIME-DIVISIONAL SWITCH | 3 $\mu$ s | 3 $\mu$ s | 3 $\mu$ s | 2 $\mu$ s |
| THROUGHRATE BY EXTERNAL IC | 2 $\mu$ s | 2 $\mu$ s | 2 $\mu$ s | 1.5 $\mu$ s |
| BLANKING PERIOD | 2 $\mu$ s | 1 $\mu$ s | 1 $\mu$ s | 1 $\mu$ s |
| INVERSION DISPLAY METHOD | DOT INVERSION | DOT INVERSION | DOT INVERSION | DOT INVERSION |
| DOT FREQUENCY | 78.75MHz | 108MHz | 135MHz | 157.5MHz |

EP 1 755 105 A2

# Fig. 23

44-1  44-2  44-3  44-4  44-5

15

16

DRIVER IC  DRIVER IC  DRIVER IC  DRIVER IC  DRIVER IC

320Pin  320Pin  320Pin  320Pin  320Pin

1600line × 3RGB=4800line

1200line

UXGA DISPLAY
EFFECTIVE DISPLAY REGION

40

EP 1 755 105 A2

## Fig. 24

| HORIZONTAL SCANNING TIME | 16μs | 13.333μs | 12.308μs | 11.429μs | 10.667μs | 10μs | 9.412μs |
|---|---|---|---|---|---|---|---|
| TIME TO BE SELECTED BY TIME-DIVISIONAL SWITCH | 3μs | 3μs | 3μs | 2.5μs | 2μs | 2μs | 2μs |
| THROUGHRATE BY EXTERNAL IC | 2μs | 2μs | 2μs | 2μs | 1.5μs | 1.5μs | 1.5μs |
| BLANKING PERIOD | 1μs | 1μs | 1μs | 1μs | 1μs | 1μs | 1μs |
| INVERSION DISPLAY METHOD | DOT INVERSION | DOT INVERSION | DOT INVERSION | DOT INVERSION | DOT INVERSION | DOT INVERSION | DOT INVERSION |
| DOT FREQUENCY | 135MHz | 162MHz | 175.5MHz | 189MHz | 202.5MHz | 216MHz | 229.5MHz |

EP 1 755 105 A2

# Fig. 25

EP 1 755 105 A2

44-1

44-2

15

16

DRIVER IC

DRIVER IC

320Pin

320Pin

640line × 3RGB=1920line

480line(240line)

VGA DISPLAY

EFFECTIVE DISPLAY REGION

40

# Fig. 26

# Fig. 27

| | VGA | QVGA(1) | QVGA(2) |
|---|---|---|---|
| THE NUMBER OF PIXELS | HORIZONTAL:640 × 3RGB VERTICAL:480 | HORIZONTAL:320 × 3RGB VERTICAL:240 | HORIZONTAL:320 × 3RGB VERTICAL:240 |
| HORIZONTAL SCANNING TIME | 31.778 $\mu$ s | 63.492 $\mu$ s | 70.667 $\mu$ s |
| TIME TO BE SELECTED BY TIME-DIVISIONAL SWITCH | 6.774 $\mu$ s | 14.6 $\mu$ s | 10.0 $\mu$ s |
| THROUGHRATE BY EXTERNAL IC | 3 $\mu$ s | 3 $\mu$ s | 3 $\mu$ s |
| BLANKING PERIOD | PERIOD(a),(b):1.7 $\mu$ s PERIOD(c):8.056 $\mu$ s | PERIOD(a),(b):3 $\mu$ s PERIOD(c):13.692 $\mu$ s | PERIOD(a),(b):7 $\mu$ s PERIOD(c):26.667 $\mu$ s |
| INVERSION DISPLAY METHOD | 1H VCOM INVERSION | 1H VCOM INVERSION | 1H VCOM INVERSION |

# Fig. 28

CONTROL CLOCK → | SHIFT REGISTER | ⌇ 31

DATA → | SAMPLING SWITCHES | ⌇ 32

| LEVEL SHIFTER | ⌇ 33

| DATA LATCH | ⌇ 34

| REFERENCE VOLTAGE GENERATING CIRCUIT | → | D/A CONVERTER | ⌇ 35

| OUTPUT CIRCUIT (VOLTAGE FOLLOWER) | ⌇ 36

↓↓↓ · · · · · · ↓↓↓

# Fig. 29

VOLTAGE FOLLOWER

36

# Fig. 30

VIDEO DATA

INTERLOCKING

83

81    a    b    82

MEMORY CIRCUIT (1)          MEMORY CIRCUIT (2)

R  G  B                      R  G  B

84-1              85              84-2

b      a

44-1            44-2            44-3

DRIVER IC      DRIVER IC      DRIVER IC

40

LCD PANEL

# Fig. 31

VIDEO DATA

INTERLOCKING

83

81 a  b 82

MEMORY CIRCUIT (1)          MEMORY CIRCUIT (2)

R G B R G B R G B          R G B R G B R G B

84—1  84—2  84—3          84—4  84—5  84—6

85—1        85—2        85—3

b a    b a    b a

44—1        44—2        44—3

DRIVER IC   DRIVER IC   DRIVER IC

40 —  LCD PANEL

## Fig. 32A

APPLIED VOLTAGE (V)

## Fig. 32B

APPLIED VOLTAGE (V)

*Fig. 33A*

HIGH
POTENTIAL

S3' | RED    S1 | BLUE    S2 | GREEN    S3 | RED

Csig1    Csig1    Csig1

Csig2    Csig2    Csig2    Csig2

*Fig. 33B*

HIGH
POTENTIAL

S3' | RED    S1 | BLUE    S2 | GREEN    S3 | RED

DIVING
POTENTIAL
←

Csig1    Csig1    Csig1

Csig2    Csig2    Csig2    Csig2

*Fig. 33C*

HIGH
POTENTIAL      HIGH
POTENTIAL

S3' | RED    S1 | BLUE    S2 | GREEN    S3 | RED

DIVING
POTENTIAL
→      DIVING
POTENTIAL
←

Csig1    Csig1    Csig1

Csig2    Csig2    Csig2    Csig2

# Fig. 34

HORIZONTAL DIRECTION SCANNING TIME:1H

SIGNAL LINE OUTPUT
WAVEFORM FROM
DRIVER IC OUTPUT

R1

1/3 H TIME
OR LESS

R2

B1

1/3 H TIME
OR LESS

B2

G1

1/3 H TIME
OR LESS

G2

R3

G3

B3

PERIOD TO BE
SELECTED BY TIME-
DIVISIONAL SWITCH

S1

1/3 H TIME
OR LESS

S2

1/3 H TIME
OR LESS

S3

1/3 H TIME
OR LESS

THE CASE OF HIGH
SIGNAL OUTPUT
AFTER SWITCHING

B1

ΔV

ΔV

G1

ΔV

R1

THE CASE OF LOW
SIGNAL OUTPUT
AFTER SWITCHING

R1

G1

B1

ΔV

ΔV

ΔV

Fig. 35A

Fig. 35B

Fig. 35C

# Fig. 36

HORIZONTAL DIRECTION SCANNING TIME:1H

SIGNAL LINE OUTPUT
WAVEFORM FROM
DRIVER IC OUTPUT

R1 — 1/3 H TIME OR LESS — R2
B1 — 1/3 H TIME OR LESS — B2
G1 — 1/3 H TIME OR LESS — G2

R3 — G3 — B3

PERIOD TO BE
SELECTED BY TIME-
DIVISIONAL SWITCH

S1 — 1/3 H TIME OR LESS

S2 — 1/3 H TIME OR LESS

S3 — 1/3 H TIME OR LESS

THE CASE OF ODD
SIGNAL OUTPUT
AFTER SWITCHING

B1
G1 — ΔV — ΔV
R1 — ΔV

THE CASE OF EVEN
SIGNAL OUTPUT
AFTER SWITCHING

R1 — ΔV — ΔV
G1 — ΔV
B1

# Fig. 37A

DRIVER IC OUTPUT  DRIVER IC OUTPUT  DRIVER IC OUTPUT

TIME-DIVISIONAL SWITCH

PIXEL ARRAY

BLUE GREEN RED BLUE GREEN RED BLUE GREEN RED

1H INVERSION DRIVING METHOD

# Fig. 37B

DRIVER IC OUTPUT  DRIVER IC OUTPUT  DRIVER IC OUTPUT

TIME-DIVISIONAL SWITCH

PIXEL ARRAY

RED GREEN BLUE RED GREEN BLUE RED GREEN BLUE

DOT INVERSION DRIVING METHOD

**REFERENCES CITED IN THE DESCRIPTION**

**Patent documents cited in the description**

- EP 99909300 A